# EUROPEAN PATENT APPLICATION

(11) **EP 4 772 481 A1**
(43) Date of publication of application: **08.07.2026**
(21) Application number: 24859276.8
(22) Date of filing: 26.07.2024
(51) Int. Cl.: C02F 1/28

(54) **WATER PURIFICATION FILTER, WATER PURIFICATION CARTRIDGE INCLUDING SAID WATER PURIFICATION FILTER, AND METHOD FOR ASSEMBLING SAID WATER PURIFICATION CARTRIDGE**

(30) Priority: 28.08.2023 JP 2023137878
(71) Applicant: Unitika Ltd., Osaka-shi, Osaka 541-8566 (JP)
(72) Inventor: TANIGUCHI, Shinji, Uji-shi, Kyoto 611-0021 (JP); UCHIDA, Mitsuhiro, Tokyo 103-8321 (JP)
(74) Representative: Müller-Boré & Partner Patentanwälte PartG mbB
(86) International application number: PCT/JP2024/026740
(87) International publication number: WO 2025/047234

(57) **Abstract**

A water purification filter according to an aspect of the present invention is formed by winding a sheet containing fibrous activated carbon, the water purification filter is columnar in shape, and the water purification filter has a hardness of 33 to 59.

## Description

### TECHNICAL FIELD

The present invention relates to a water purification filter, a water purification cartridge including the water purification filter, and a method of assembling the water purification cartridge.

### BACKGROUND ART

In recent years, various types of water purifiers have been proposed. For example, JP 2016-2529A (Patent Literature 1) describes that a columnar water purification filter 10 is provided inside the main body of a portable water supply device, and purified water that has passed through the water purification filter 10 can be drunk from the drinking spout of the main body of the portable water supply device.

### CITATION LIST

### PATENT LITERATURE

Patent Literature 1: JP 2016-2529A

### SUMMARY OF THE INVENTION

### TECHNICAL PROBLEMS

The present inventors have found a problem described below in conventional water purification filters such as those disclosed in Patent Literature 1. That is, the present inventors have found that conventional water purification filters lack the perspective of reducing the burden on the environment. For example, Patent Literature 1 lacks the perspective of further reducing the burden on the environment by making only the water purification filter replaceable in a water purification cartridge equipped with the water purification filter, while making the case or the like for storing the water purification filter reusable.

Furthermore, in order to purify raw water using a water purification filter, the raw water must naturally pass through the water purification filter reliably. For example, the raw water must be prevented from passing through gaps between the water purification filter and the case or the like that stores the water purification filter.

In an aspect, the present invention has been made in view of the above circumstances, and its object is to provide a water purification filter that can be easily attached to and detached from a case that stores the water purification filter while ensuring that raw water passes through the water purification filter.

### SOLUTIONS TO THE PROBLEMS

In order to solve the above-described problems, the present invention employs the following configuration.

A water purification filter according to a first aspect includes a wound sheet containing fibrous activated carbon, the water purification filter is columnar in shape, and the water purification filter has a hardness of 33 to 59 measured by a following measurement method:
<Measurement method>
the measurement is performed using a hardness tester GS701G manufactured by TECLOCK Co., Ltd. in accordance with the method prescribed in JIS S 6050 "Plastic Erasers," and the average value for N = 5 is taken as the hardness.

In this configuration, the water purification filter is a columnar water purification filter formed by winding a sheet containing fibrous activated carbon, and has a hardness of 33 to 59. The present inventors conducted an experiment comparing a columnar water purification filter formed by winding a sheet containing fibrous activated carbon as an example with the following water purification filter (comparative example). That is, the present inventors conducted an experiment comparing the comparative example with the above-described example, using a water purification filter prepared by a wet molding method using granular activated carbon as a comparative example. The hardness of the example measured by the above-described measurement method was "33 to 59." In contrast, the hardness of the comparative example measured by the above-described measurement method was "83," which was higher than the upper limit of the hardness of the example (59). Therefore, the present inventors confirmed that winding a sheet containing fibrous activated carbon makes it possible to create a columnar water purification filter that is lower in hardness than the water purification filter according to the comparative example described above, specifically has a hardness of 33 to 59.

The water purification filter has a hardness of 33 to 59 and is compressible (deformable). The water purification filter with a hardness of 33 to 59 can be compressed by human force, for example. Therefore, the water purification filter can be easily stored, for example, in a cylindrical storage case having an inner diameter smaller than the outer diameter (diameter) of the water purification filter. The present inventors confirmed that the water purification filter with a hardness of 33 to 59 can be compressed and stored in a cylindrical storage case having an inner diameter smaller than the outer diameter of the water purification filter. Specifically, the present inventors confirmed that the water purification filter can be stored in a cylindrical storage case having an inner diameter 1 mm smaller than the outer diameter of the water purification filter. In particular, the present inventors confirmed that the water purification filter can be loaded into the storage case while being compressed (compressed radially), and that such loading does not collapse the activated carbon layer of the water purification filter. That is, the present inventors confirmed that pressing the water purification filter in the axial direction allows the water purification filter to be compressed radially without collapsing the activated carbon layer of the water purification filter, and to be loaded into the above-described storage case.

In contrast, the water purification filter according to the comparative example could not be stored in a cylindrical storage case having an inner diameter smaller than the outer diameter of the water purification filter (for example, an inner diameter 1 mm smaller than the outer diameter of the water purification filter). Specifically, when an attempt was made to store the water purification filter according to the comparative example in the storage case, the water purification filter could not be compressed. That is, when an attempt was made to store the water purification filter in the storage case, the activated carbon layer became collapsed.

For example, the water purification filter, which can be stored in a cylindrical storage case having an inner diameter smaller than the outer diameter of the water purification filter, achieves the following advantageous effects. That is, the water purification filter is stored in the storage case in a compressed (deformed) state, and the outer peripheral surface of the water purification filter and the inner peripheral surface of the storage case are in contact with each other without any gaps. Therefore, the water purification filter can prevent raw water from passing through a gap between the outer peripheral surface of the water purification filter and the inner peripheral surface of the storage case, thereby ensuring that the raw water passes through the water purification filter. The water purification filter can prevent raw water from passing through a gap between the outer peripheral surface of the water purification filter and the inner peripheral surface of the storage case without requiring any other components, thereby ensuring that the raw water passes through the water purification filter.

With a hardness of 33 to 59, the water purification filter can be detachably stored in a cylindrical storage case having an inner diameter smaller than the outer diameter of the water purification filter. That is, the water purification filter can be easily stored in the storage case and can be easily removed from the storage case by being compressed. Accordingly, only the water purification filter needs to be replaced, and the storage case can be reused. Therefore, the water purification filter can reduce environmental load compared to conventional water purification filters that are replaced only together with the storage case.

In particular, the present inventors experimentally confirmed that the above-described advantageous effects can be significantly achieved by setting the hardness of the columnar water purification filter to 33 to 59. That is, a water purification filter with a hardness greater than the upper limit (59) (for example, the water purification filter according to the comparative example) could not be stored in a cylindrical storage case with an inner diameter smaller than the outer diameter of the water purification filter. In contrast, the water purification filter was stored in a cylindrical storage case with an inner diameter smaller than the outer diameter of the water purification filter, preventing raw water from passing through a gap between the outer peripheral surface of the water purification filter and the inner peripheral surface of the storage case. That is, unlike water purification filters with a hardness greater than the upper limit (59), setting the hardness to 33 to 59 of the water purification filter ensures that raw water passes through the water purification filter. Furthermore, setting the hardness to 33 to 59 allows the water purification filter to be easily compressed and loaded into a cylindrical storage case having an inner diameter smaller than the outer diameter of the water purification filter, and also to be easily removed from the storage case.

Therefore, the water purification filter has the advantageous effect of being easily attached to and detached from a cylindrical storage case having an inner diameter smaller than the outer diameter of the water purification filter, while ensuring that raw water passes through the water purification filter.

A water purification filter according to a second aspect is the water purification filter according to the first aspect that may have elasticity. In this configuration, the water purification filter is formed by winding the sheet containing fibrous activated carbon, is columnar in shape, has a hardness of 33 to 59, and has elasticity. The present inventors temporarily placed a columnar water purification filter formed by winding a sheet containing fibrous activated carbon inside a cylindrical storage case having an inner diameter smaller than the outer diameter of the water purification filter, then removed the water purification filter, and then measured the outer diameter of the water purification filter. As a result, the present inventors confirmed that the value of the outer diameter of the water purification filter after removal had almost recovered to the value of the outer diameter of the water purification filter before it was stored inside the storage case, that is, the water purification filter has elasticity. Therefore, the water purification filter formed by winding a sheet containing fibrous activated carbon, is columnar in shape, and has a hardness of 33 to 59, has elasticity.

The water purification filter has elasticity, and due to the elasticity, it can be stored in a cylindrical storage case having an inner diameter smaller than the outer diameter of the water purification filter by elastic deformation, for example. When stored in such a storage case, the water purification filter can prevent raw water from passing through a gap between the outer peripheral surface of the water purification filter and the inner peripheral surface of the storage case, thereby ensuring that raw water passes through the water purification filter. That is, due to the above-described elasticity, the water purification filter can prevent raw water from passing through a gap between the outer peripheral surface of the water purification filter and the inner peripheral surface of the storage case without requiring any other components, thereby ensuring that the raw water passes through the water purification filter.

Due to the above-described elasticity, the water purification filter can be detachably stored in a cylindrical storage case having an inner diameter smaller than the outer diameter of the water purification filter. That is, with the elasticity, the water purification filter can be easily stored in the storage case and easily removed from the storage case. Therefore, only the water purification filter needs to be replaced, and the storage case can be reused. Therefore, the water purification filter can reduce environmental load, compared to conventional water purification filters that are replaced only together with the storage case.

Therefore, the water purification filter has the advantageous effect of being easily attached to and detached from a cylindrical storage case having an inner diameter smaller than the outer diameter of the water purification filter, while ensuring that raw water passes through the water purification filter.

A water purification filter according to a third aspect is the water purification filter according to the first or second aspect, which may be stored in a cylindrical storage case, and may have an outer diameter that is larger by 1 mm or less than an inner diameter of the storage case at least at one point in an axial direction.

In this configuration, the water purification filter is stored in a cylindrical storage case, and the outer diameter (diameter) of the water purification filter is larger than the inner diameter of the storage case by 1 mm or less at least at one point in the axial direction. For example, the outer diameter of the water purification filter is larger by 1 mm or less than the inner diameter of the cylindrical storage case that has a constant inner diameter throughout the axial direction.

The present inventors confirmed that the water purification filter can be stored in a cylindrical storage case having an inner diameter at least 1 mm smaller than the outer diameter of the water purification filter at one point in the axial direction without collapsing the activated carbon layer of the water purification filter. Furthermore, the water purification filter stored in the storage case can be easily removed from the storage case by being compressed.

Therefore, the water purification filter has the advantageous effect of being easily attached to and detached from the storage case while ensuring that raw water passes through the water purification filter.

A water purification cartridge according to a fourth aspect may include: the water purification filter according to any one of the first to third aspects, a storage case that stores the water purification filter in a removable manner, and a lid body detachably attached to the storage case. The storage case has a cylindrical first peripheral wall portion. One axial end of the first peripheral wall portion is open, and the other axial end of the first peripheral wall portion is closed by a first surface portion. The inner diameter of at least the other end closed by the first surface portion of the first peripheral wall portion is smaller by 1 mm or less than the outer diameter of the water purification filter. The first surface portion is provided with a first water flow portion through which purified water flows out or raw water flows in. The lid body has a cylindrical second peripheral wall portion, one axial end of the second peripheral wall portion is open, and the other axial end of the second peripheral wall portion is closed by a second surface portion. The second surface portion is provided with a second water flow portion through which raw water flows in or purified water flows out. The second surface portion closes the open end of the storage case in which the water purification filter is removably stored.

In this configuration, the water purification cartridge includes the water purification filter, the storage case, and the lid body. The water purification filter is formed by winding a sheet containing fibrous activated carbon, is columnar in shape, has a hardness of 33 to 59, and is compressible. The storage case is cylindrical in shape and has an inner diameter smaller than the outer diameter of the water purification filter. The lid body is detachably attached to the storage case so as to close the open end of the storage case that removably stores the water purification filter.

Therefore, the water purification cartridge can compress the water purification filter to store the water purification filter in the storage case. By storing the water purification filter in the storage case, the water purification cartridge can prevent raw water from passing through a gap between the outer peripheral surface of the water purification filter and the inner peripheral surface of the storage case, ensuring that raw water passes through the water purification filter. The water purification cartridge ensures that the outer peripheral surface of the water purification filter and the inner peripheral surface of the storage case are in contact with each other without any gaps, at least at the other end of the storage case that is closed by the first surface portion. The water purification cartridge can also easily store the water purification filter in the storage case by compressing the water purification filter, and the lid body can be detachably attached to the storage case storing the water purification filter. Furthermore, the lid body of the water purification cartridge can be easily removed from the storage case, and the water purification filter can be easily removed from the storage case.

Therefore, the water purification cartridge has the advantageous effect of ensuring that raw water passes through the water purification filter by the water purification filter, the storage case, and the lid body, while allowing the water purification filter to be easily attached to and detached from the storage case.

A water purification cartridge according to a fifth aspect is the water purification cartridge according to the fourth aspect, in which one axial end surface of the water purification filter may be in contact with the first surface portion of the storage case, and the other axial end surface may be in contact with the second surface portion of the lid body.

In this configuration, one axial end surface of the water purification filter in the water purification cartridge is in contact with the first surface portion of the storage case, and the other axial end surface of the water purification filter in the water purification cartridge is in contact with the second surface portion of the lid body. Therefore, the water purification cartridge can prevent raw water from passing through a gap between the water purification filter and the storage case and a gap between the water purification filter and the lid body, and can ensure that raw water passes through the water purification filter.

The inner diameter of the storage case, at least at the other end closed by the first surface portion, is smaller than the outer diameter of the water purification filter by 1 mm or less. However, as described above, the water purification filter has a hardness of 33 to 59 and is compressible. Therefore, the lid body presses the water purification filter in the axial direction by the second surface portion, compressing and pressing the water purification filter into the storage case, so that the water purification filter can be stored in the storage case. The lid body then closes the open end of the storage case storing the water purification filter by the second surface portion. Therefore, the lid body can stably store the water purification filter in the storage case in a compressed state.

A water purification cartridge according to a sixth aspect is the water purification cartridge according to the fourth or fifth aspect, in which the lid body may be detachably attached to the storage case by screwing a male thread portion provided on an outer peripheral surface of the first peripheral wall portion of the storage case into a female thread portion provided on an inner peripheral surface of the second peripheral wall portion of the lid body.

In this configuration, the lid body of the water purification cartridge is detachably attached to the storage case by screwing the male thread portion on the outer peripheral surface of the storage case into the female thread portion on the inner peripheral surface of the lid body. Therefore, the lid body of the water purification cartridge can be easily attached to and removed from the storage case.

In the water purification cartridge, screwing the male thread portion into the female thread portion makes it possible to attach the lid body to the storage case, for example, by pressing the water purification filter into the storage case by the second surface portion of the lid body. Therefore, the water purification cartridge allows the water purification filter to be easily stored in the storage case by pressing the water purification filter into the storage case with the lid body as the lid body is attached to the storage case.

A water purification cartridge according to a seventh aspect is the water purification cartridge according to any one of the fourth to sixth aspects, in which the first peripheral wall portion of the storage case may be formed with a tapered portion whose inner diameter increases toward the open end. In this configuration, in the water purification cartridge, the storage case is formed with a tapered portion whose inner diameter increases toward the open end. Therefore, the water purification cartridge makes it easy to insert the water purification filter into the storage case from the open end of the storage case.

A water purification cartridge according to an eighth aspect is the water purification cartridge according to any one of the fourth to seventh aspects, in which a protrusion that protrudes axially outward may be provided on an axially outer peripheral surface of at least one of the first surface portion of the storage case and the second surface portion of the lid body. In this configuration, a protrusion that protrudes axially outward is provided on the outer peripheral surface of at least one of the first surface portion of the storage case and the second surface portion of the lid body. Therefore, the water purification cartridge allows a user or the like of the water purification cartridge to use the protrusion as a knob to easily remove the water purification cartridge from a container (pitcher) or the like to which the water purification cartridge is attached.

A method of assembling a water purification cartridge according to a ninth aspect includes: a step of preparing a water purification filter that is formed by winding a sheet containing fibrous activated carbon, the water purification filter is columnar in shape, and the water purification filter has a hardness of 33 to 59 measured by a following measurement method; a step of preparing a storage case for removably storing the water purification filter, the storage case having a cylindrical first peripheral wall portion, one axial end of the first peripheral wall portion being open and the other axial end of the first peripheral wall portion being closed by a first surface portion, in the first peripheral wall portion, an inner diameter of at least the other end closed by the first surface portion being smaller by 1 mm or less than an outer diameter of the water purification filter, and the first surface portion being provided with a first water flow portion through which purified water flows out or raw water flows in; a step of inserting the water purification filter into the first peripheral wall portion of the storage case from the open one end of the storage case; a step of preparing a lid body that is detachably attached to the storage case, the lid body having a cylindrical second peripheral wall portion, one axial end of the second peripheral wall portion being open and the other axial end of the second peripheral wall portion being closed by a second surface portion, the second surface portion being provided with a second water flow portion through which raw water flows in or purified water flows out; and a step of detachably attaching the lid body to the storage case such that the open one end of the storage case is closed by the second surface portion of the lid body while the storage case with the water purification filter inserted into the first peripheral wall portion from the open end side of the lid body, is stored in the lid body:

### <Measurement Method>

the measurement is performed using a hardness tester GS701G manufactured by TECLOCK Co., Ltd. in accordance with the method prescribed in JIS S 6050 "Plastic Erasers," and the average value for N = 5 is taken as the hardness.

In this configuration, the assembly method includes the step of inserting the water purification filter into the storage case and the step of detachably attaching the lid body to the storage case with the water purification filter inserted therein. The water purification filter is formed by winding a sheet containing fibrous activated carbon, is columnar in shape, has a hardness of 33 to 59, and is compressible (deformable). The storage case is cylindrical in shape and has an inner diameter smaller than the outer diameter of the water purification filter. The lid body is detachably attached to the storage case so as to close the open end of the storage case that removably stores the water purification filter.

As described above, the water purification filter has a hardness of 33 to 59 and is compressible. Therefore, the assembly method allows the water purification filter to be stored in the storage case by compressing the water purification filter. According to the assembly method, the water purification filter is compressed and stored in the storage case, thereby bringing the outer peripheral surface of the water purification filter into contact with the inner peripheral surface of the storage case without any gaps. According to the assembly method, the outer peripheral surface of the water purification filter is brought into contact with the inner peripheral surface of the storage case without any gaps, at least at the other end of the storage case that is closed by the first surface portion.

Therefore, the assembly method makes it possible to provide a water purification cartridge in which storing the water purification filter in the storage case prevents raw water from passing through a gap between the outer peripheral surface of the water purification filter and the inner peripheral surface of the storage case, ensuring that raw water passes through the water purification filter. The assembly method also allows the water purification filter to be compressed and easily stored in the storage case, so that the lid body can be detachably attached to the storage case storing the water purification filter. Furthermore, the water purification cartridge assembled by the assembly method allows the lid body to be easily removed from the storage case and also allows the water purification filter to be easily removed from the storage case.

Therefore, the assembly method has the advantageous effect of providing a water purification cartridge in which the water purification filter can be easily attached to and detached from the storage case while ensuring by the water purification filter and the storage case that raw water passes through the water purification filter.

A method of assembling a water purification cartridge according to a tenth aspect is the method of assembling a water purification cartridge according to the ninth aspect, in which in the step of detachably attaching the lid body, the water purification filter may be stored in the first peripheral wall portion of the storage case by pressing the water purification filter into the storage case by the second surface portion of the lid body.

In this configuration, according to the assembly method, in the step of detachably attaching the lid body, the water purification filter is pressed into the storage case by the second surface portion of the lid body, thereby storing the water purification filter in the storage case. That is, according to the assembly method, the lid body is attached to the storage case while the water purification filter is pressed into the storage case by the second surface portion of the lid body. Therefore, the assembly method allows the water purification filter to be easily stored in the storage case by pressing the water purification filter into the storage case by the lid body as the lid body is attached to the storage case.

A method of assembling a water purification cartridge according to an eleventh aspect is the method of assembling a water purification cartridge according to the ninth or tenth aspect above, in which a male thread portion may be provided on an outer peripheral surface of the first peripheral wall portion of the storage case, a female thread portion may be provided on an inner peripheral surface of the second peripheral wall portion of the lid body, and in the step of detachably attaching the lid body, the lid body may be detachably attached to the storage case by screwing the male thread portion into the female thread portion while the water purification filter is pressed into the storage case by the second surface portion of the lid body.

In this configuration, according to the assembly method, in the step of detachably attaching the lid body, the lid body is attached to the storage case by screwing the male thread portion into the female thread portion while the water purification filter is pressed into the storage case by the lid body. Therefore, according to the assembly method, the water purification filter can be easily and reliably stored in the storage case by gradually pressing the water purification filter into the storage case by the lid body as the lid body is attached to the storage case.

### ADVANTAGEOUS EFFECTS OF THE INVENTION

According to the present invention, it is possible to provide a water purification filter that can be easily attached to and detached from a case that stores the water purification filter, while ensuring that raw water passes through the water purification filter.

### BRIEF DESCRIPTION OF THE DRAWINGS

Fig. 1 is a cross-sectional diagram schematically illustrating an example of the main configuration of a water purifier according to an embodiment.
Fig. 2(A) is an perspective diagram schematically illustrating an example of a main configuration of a water purification cartridge according to the embodiment.
Fig. 2(B) is a cross-sectional diagram schematically illustrating an example of a main configuration of members that constitute the water purification cartridge.
Fig. 3 is a cross-sectional diagram schematically illustrating an example of the main configuration of the water purification cartridge in Fig. 2.
Fig. 4(A) is a diagram schematically illustrating an example of the main configuration of the water purification filter according to the embodiment.
Fig. 4(B) is a diagram schematically illustrating an example of the main configuration of the water purification filter according to the embodiment.
Fig. 5(A) is a diagram schematically illustrating an example of a main configuration of a storage case according to the embodiment.
Fig. 5(B) is a diagram schematically illustrating an example of a main configuration of the storage case according to the embodiment.
Fig. 6(A) is a diagram schematically illustrating an example of a main configuration of a lid body according to the embodiment.
Fig. 6(B) is a diagram schematically illustrating an example of a main configuration of the lid body according to the embodiment.
Fig. 7 is a flowchart illustrating an example of a procedure for executing an assembly method according to the embodiment.
Fig. 8 is a diagram illustrating the water purification cartridge according to the embodiment, in which the water purification filter is arranged between the storage case and the lid body in an elastically deformed state.

### DESCRIPTION OF EMBODIMENTS

An embodiment according to an aspect of the present invention (hereinafter also referred to as "the present embodiment") will be described below with reference to the drawings. However, the present embodiment described below is merely an example of the present invention in all respects. It is obvious that various improvements and modifications can be made without departing from the scope of the present invention. That is, specific configurations according to the embodiment may be adopted as appropriate in implementing the present invention.

### <1. Overview of Water Purifier>

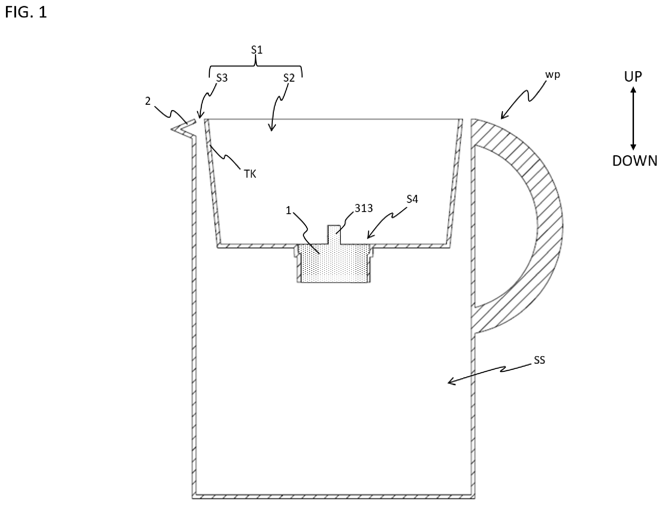

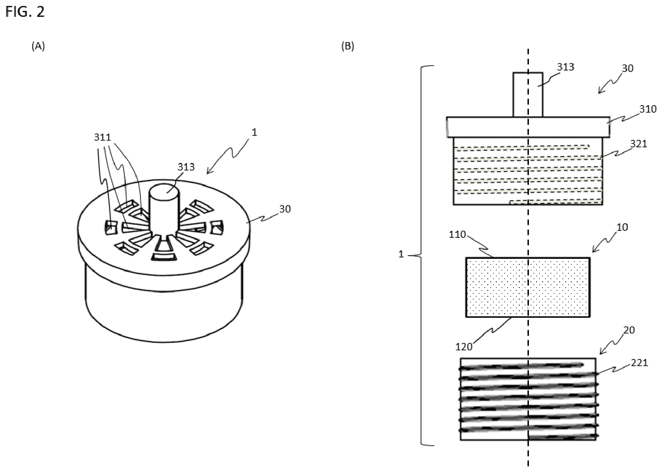

Hereinafter, an embodiment of a water purifier WP having a water purification cartridge 1 according to an aspect of the present invention and a container 2 to which the water purification cartridge 1 is attached will be described with reference to the drawings. Fig. 1 is a cross-sectional diagram schematically illustrating an example of the main configuration of the water purifier WP according to the present embodiment. That is, Fig. 1 schematically illustrates the cross-sectional configuration of the water purifier WP parallel to and tangent to the axis (axial line) of the water purification cartridge 1 (particularly, a water purification filter 10 described below with reference to Fig. 2 and the like). As illustrated in Fig. 1, the water purifier WP includes the container (pitcher) 2 and the water purification cartridge 1 stored therein.

As illustrated in Fig. 1, the container 2 has an opening S1 at the top and an open-topped tank TK inside. The tank TK is a part used to store raw water, and raw water can be poured into the tank TK through an opening S2 at the top. The tank TK has an opening S4 formed at the bottom, and the water purification cartridge 1 is attached to seal the periphery of the opening S4 together with packing (not illustrated). However, the water purifier WP (container 2) is not necessarily required to include packing. In the water purifier WP, the water purification cartridge 1 may be attached to seal the periphery of the opening S4 without using packing.

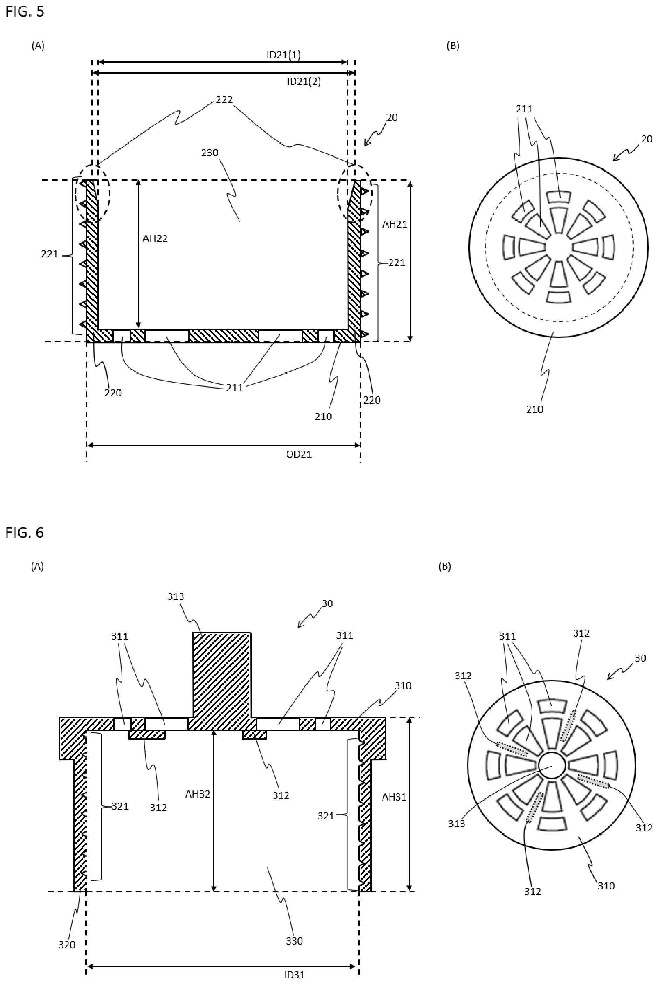

The water purification cartridge 1 illustrated in Fig. 1 has a first protrusion 313 that protrudes axially outward (upward in the example illustrated in Fig. 1) from a second surface portion 310 of a lid body 30 (described in detail later with reference to Fig. 6 and the like). Raw water in the tank TK flows into the water purification cartridge 1. The opening S2 is formed smaller than the opening S1, and therefore the opening S1 is divided into the opening S2 and an opening S3.

After passing through the inside of the water purification cartridge 1, the raw water flows out as purified water from the bottom of the water purification cartridge 1 and is stored in a server space SS below the tank TK. The opening S3 functions as an outlet for taking out the purified water from the server space SS.

As described above with reference to Fig. 1, the water purifier WP has a structure in which the water purification cartridge 1 is interposed between the tank TK located at the upper side of the container 2 and the server space SS located at the lower side. The raw water stored in the tank TK flows into the server space SS through the water purification cartridge 1 due to its own weight, and is purified within the water purification cartridge 1.

### <2. Overview of Water Purification Cartridge>

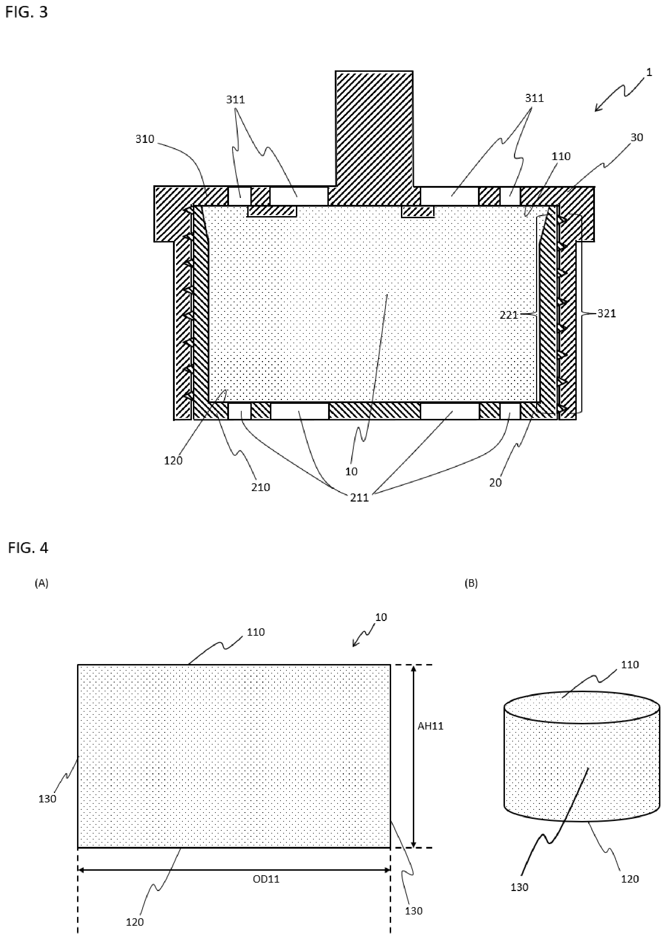

Next, the water purification cartridge 1 will be described with reference to Figs. 2 and 3. Figs. 2 and 3 are diagrams each schematically illustrating an example of the main configuration of the water purification cartridge 1 according to the present embodiment. Specifically, Fig. 2(A) is a perspective view of the water purification cartridge 1. Fig. 2(B) is a cross-sectional diagram schematically illustrating an example of the main configurations of components constituting the water purification cartridge 1, that is, a cross-sectional diagram schematically illustrating an example of the main configurations of the water purification filter 10, a storage case 20, and the lid body 30. In particular, Fig. 2(B) schematically illustrates cross-sectional configurations of the water purification filter 10, the storage case 20, and the lid body 30, which are parallel to and tangent to the axis of the water purification filter 10 (axial line; the dotted line extending vertically in Fig. 2(B)). In the water purification cartridge 1, the water purification filter 10 is disposed coaxially with the storage case 20 and the lid body 30, for example, and the extension direction of the central axis of the water purification filter 10 coincides with the axial direction of the water purification cartridge 1. Fig. 3 is a cross-sectional diagram illustrating an example of the main configuration of the water purification cartridge 1, which is formed by attaching the lid body 30 to the storage case 20 that stores the water purification filter 10.

As illustrated in Fig. 2(A), the water purification cartridge 1 according to the present embodiment is generally cylindrical and typically has a columnar appearance. As illustrated in Fig. 2(B), the water purification cartridge 1 includes the storage case 20, the columnar water purification filter 10 stored in the storage case 20, and the lid body 30 that closes the open end of the storage case 20 storing the water purification filter 10. As illustrated in Fig. 3, in the water purification cartridge 1, raw water having flown into the water purification filter 10 from a second water flow portion 311 of the lid body 30 passes through the water purification filter 10 in the axial direction (from top to bottom in the illustrated example) and flows out as purified water from a first water flow portion 211 of the storage case 20.

The water purification filter 10 is a columnar member stored in the storage case 20 to filter raw water. The axial end surfaces of the water purification filter 10 are an upper end surface 110 and a lower end surface 120. The storage case 20 is a cylindrical member with one axial end (the upper end in the illustrated example) open and the other axial end (the lower end in the illustrated example) closed by a disk-shaped first surface portion 210. The first surface portion 210 of the storage case 20 has the first water flow portion 211 through which purified water flows out, and the outer peripheral surface of the storage case 20 has a male thread portion 221. The lid body 30 is a cylindrical member with one axial end (the lower end in the illustrated example) open and the other axial end (the upper end in the illustrated example) closed by the disk-shaped second surface portion 310. The lid body 30 is detachably attached to the storage case 20 so as to close the open end (the upper end in the illustrated example) of the storage case 20 storing the water purification filter 10. The second surface portion 310 of the lid body 30 has the second water flow portion 311 through which raw water flows in, and the inner peripheral surface of the lid body 30 has the male thread portion 221.

In the present embodiment, the lid body 30 is detachably attached to the storage case 20 that stores the water purification filter 10 by screwing the male thread portion 221 of the storage case 20 into a female thread portion 321 of the lid body 30.

One axial end surface of the water purification filter 10 (the lower end surface 120 in the illustrated example) is in contact with the first surface portion 210 (particularly, its inner surface) of the storage case 20, and the other end surface (the upper end surface 110 in the illustrated example) is in contact with the second surface portion 310 (particularly, its inner surface) of the lid body 30.

The raw water flows into the water purification cartridge 1 from the second water flow portion 311 of the lid body 30, passes through the water purification filter 10 in the axial direction (from top to bottom in the illustrated example), and flows out as purified water from the first water flow portion 211 of the storage case 20. Each member will be described in detail below.

### <3. Water Purification Filter>

Fig. 4 is a diagram schematically illustrating an example of the main configuration of the water purification filter 10. Specifically, Fig. 4(A) is a cross-sectional diagram schematically illustrating an example of the main configuration of the water purification filter 10. That is, Fig. 4(A) schematically illustrates the cross-sectional configuration of the water purification filter 10 that is parallel to and tangent to the axis (axial line) of the water purification filter 10. Fig. 4(B) is a perspective diagram schematically illustrating an example of the main configuration of the water purification filter 10.

As described above, the water purification filter 10 is a component that filters raw water flowing in through the second water flow portion 311 of the lid body 30 by passing the raw water in the axial direction (from top to bottom in the illustrated example) to produce purified water. The purified water filtered by the water purification filter 10 flows out of the water purification cartridge 1 through the first water flow portion 211 of the storage case 20.

As illustrated in Fig. 4, the water purification filter 10 is a columnar water purification filter that has a side surface 130 (outer peripheral surface), and an upper end surface 110 and a lower end surface 120 as axial end surfaces. That is, the water purification filter 10 is formed in a columnar shape and has the upper end surface 110 and the lower end surface 120 at both ends in the axial direction. A sealant may be applied to the upper end surface 110 and the lower end surface 120.

In Fig. 4, a height AH11 indicates the height of the water purification filter 10 (side surface 130) in the axial direction, and an outer diameter (diameter) OD11 indicates the length of the diameter (diameter) of the water purification filter 10 (each of the upper end surface 110 and the lower end surface 120) in the radial direction.

As will be described in detail later, in the present embodiment, the water purification filter 10 is stored in a compressed state in the storage case 20 having an inner diameter (inner diameter ID21) smaller than the outer diameter OD11 of the water purification filter 10. The outer diameter OD11 of the water purification filter 10 stored in the storage case 20 is equal to the inner diameter ID21 of the storage case 20. Therefore, in the following description, when the term "outer diameter OD11" is simply used, this refers to the "outer diameter OD11(B)," which is the radial diameter (diameter) of the water purification filter 10 before storing the water purification filter 10 in the storage case 20. In addition, after storing the water purification filter 10 in the storage case 20 and then removing it from the storage case 20, the radial diameter (diameter) of the water purification filter 10 is referred to as the "outer diameter OD11(A)," which is to be distinguished from the "outer diameter OD11(B)."

The water purification filter 10 according to the present embodiment is formed by winding a sheet containing fibrous activated carbon, is columnar in shape, and has a hardness of 33 to 59 measured by the measurement method described below. For example, the water purification filter 10 has a radial hardness of 33 to 59, measured by the measurement method described below. That is, in the present embodiment, the hardness is measured using a hardness tester GS701G manufactured by TECLOCK Co., Ltd. in accordance with the method specified in JIS S 6050 "Plastic Erasers," and the average value for N = 5 is taken as the hardness. For example, the water purification filter 10 is placed on a base such that the radial direction (side surface 130) of the water purification filter 10 is aligned with the vertical direction, and the hardness is measured at the center (approximately center) of the axial direction of the side surface 130 of the water purification filter 10.

As will be described in detail in <6. Various Experiments>, the present inventors conducted experiments comparing a columnar water purification filter (water purification filter 10) formed by winding a sheet containing fibrous activated carbon as an example with the following water purification filter (comparative example). Specifically, the present inventors conducted experiments comparing the example (water purification filter 10) with the comparative example that is a water purification filter produced by a wet molding method using granular activated carbon. The hardness of the water purification filter 10 measured using the above-described measurement method was 33 to 59. In contrast, the hardness of the comparative example measured using the above-described measurement method was 83, which was higher than the upper limit (59) of the hardness of the water purification filter 10. Therefore, the present inventors confirmed that winding a sheet containing fibrous activated carbon makes it possible to produce a cylindrical water purification filter 10 having a lower hardness than the water purification filter according to the comparative example, specifically having a hardness of 33 to 59.

The water purification filter has a hardness of 33 to 59 and is compressible (deformable). The water purification filter with a hardness of 33 to 59 can be compressed by human force, for example (can be easily compressed). Therefore, the water purification filter 10 can be easily stored, for example, in a cylindrical storage case (for example, the storage case 20) having an inner diameter smaller than the outer diameter (diameter) OD11 of the water purification filter 10. The present inventors confirmed that the water purification filter 10 with a hardness of 33 to 59 can be compressed and stored in a cylindrical storage case having an inner diameter smaller than the outer diameter OD11 of the water purification filter 10. Specifically, the present inventors confirmed that the water purification filter 10 can be stored in a cylindrical storage case having an inner diameter 1 mm smaller than the outer diameter OD11 of the water purification filter 10. In particular, the present inventors confirmed that the water purification filter 10 can be loaded into the storage case while being compressed (compressed radially), and that such loading does not collapse the activated carbon layer of the water purification filter 10. That is, the present inventors confirmed that pressing the water purification filter 10 in the axial direction allows the water purification filter 10 to be compressed radially without collapsing the activated carbon layer of the water purification filter 10, and to be loaded into the above-described storage case.

In contrast, the water purification filter according to the comparative example could not be stored in a cylindrical storage case having an inner diameter smaller than the outer diameter of the water purification filter (for example, an inner diameter 1 mm smaller than the outer diameter of the water purification filter). Specifically, when an attempt was made to store the water purification filter according to the comparative example in the storage case, the water purification filter could not be compressed. That is, when an attempt was made to store the water purification filter in the storage case, the activated carbon layer became collapsed.

The water purification filter 10 is stored in a cylindrical storage case having an inner diameter smaller than the outer diameter OD11 of the water purification filter 10, for example, thereby achieving the following advantageous effects. That is, the water purification filter 10 is stored in the above-described storage case in a compressed (deformed) state, and the outer peripheral surface (side surface 130) of the water purification filter 10 and the inner peripheral surface of the storage case are in contact with each other without any gaps. Therefore, the water purification filter 10 can prevent raw water from passing through a gap between the side surface 130 of the water purification filter 10 and the inner peripheral surface of the above-described storage case, thereby ensuring that the raw water passes through the water purification filter 10. The water purification filter 10 can prevent raw water from passing through a gap between the side surface 130 of the water purification filter 10 and the inner peripheral surface of the above-described storage case without requiring any other components, thereby ensuring that the raw water passes through the water purification filter 10.

With a hardness of 33 to 59, the water purification filter 10 can be detachably stored in a cylindrical storage case having an inner diameter smaller than the outer diameter OD11 of the water purification filter 10. That is, the water purification filter 10 can be easily stored in the above-described storage case and can be easily removed from the above-described storage case by being compressed. Accordingly, only the water purification filter 10 needs to be replaced, and the above-described storage case can be reused. Therefore, the water purification filter 10 can reduce environmental load compared to conventional water purification filters that are replaced only together with the storage case.

In particular, the present inventors experimentally confirmed that the above-described advantageous effects can be significantly achieved by setting the hardness of a cylindrical water purification filter (water purification filter 10) made by winding a sheet containing fibrous activated carbon to 33 to 59. That is, a water purification filter with a hardness greater than the upper limit (59) (for example, the water purification filter according to the comparative example) could not be stored in a cylindrical storage case with an inner diameter smaller than the outer diameter of the water purification filter. In contrast, the water purification filter 10 was stored in a cylindrical storage case with an inner diameter smaller than the outer diameter OD11 of the water purification filter 10, preventing raw water from passing through a gap between the outer peripheral surface (side surface 130) of the water purification filter 10 and the inner peripheral surface of the storage case. That is, unlike water purification filters with a hardness greater than the upper limit (59), setting the hardness to 33 to 59 of the water purification filter 10 ensures that raw water passes through the water purification filter 10. Furthermore, setting the hardness to 33 to 59 allows the water purification filter 10 to be easily compressed and loaded into a cylindrical storage case having an inner diameter smaller than the outer diameter OD11 of the water purification filter 10, and also to be easily removed from the storage case.

Therefore, the water purification filter 10 has the advantageous effect of being easily attached to and detached from a cylindrical storage case having an inner diameter smaller than the outer diameter OD11 of the water purification filter 10, while ensuring that raw water passes through the water purification filter 10.

The water purification filter 10 may be formed by winding a plurality of "sheets containing fibrous activated carbon" different in thickness (bulk density). Bulk density may also be referred to as apparent density. The water purification filter 10 may be a columnar water purification filter formed by winding a sheet containing fibrous activated carbon and having a hardness of 33 to 59 as measured by the above-described method. The "sheet containing fibrous activated carbon" constituting the water purification filter 10 may be a single one, or the water purification filter 10 may be formed by winding a plurality of "sheets containing fibrous activated carbon" different in thickness.

For example, the water purification filter 10 may be formed by winding a relatively thick (low-bulk density) "sheet containing fibrous activated carbon" around the axial center, and a relatively thin (high-bulk density) "sheet containing fibrous activated carbon" around the outer periphery of the water purification filter 10. The water purification filter 10 may include (1) a core (core region) around the axial center formed by winding a relatively thick sheet, and (2) a peripheral region around the outer peripheral side of the core formed by winding a relatively thin sheet.

By adopting this configuration, the water purification filter 10 can reduce the difference in bulk density between around the axial center (core region) and its outer periphery (peripheral region), thereby preventing one-sided flow of raw water when being filtered. By reducing the difference in bulk density between the core region and the peripheral region, the water purification filter 10 can prevent raw water from flowing unevenly toward the core region or the peripheral region.

The water purification filter 10 according to the present embodiment has elasticity. Although details will be described later in <6. Various Experiments>, the present inventors measured the following values for a columnar water purification filter (water purification filter 10) formed by winding a sheet containing fibrous activated carbon. That is, the present inventors temporarily placed the above-described water purification filter inside a cylindrical storage case having an inner diameter smaller than the outer diameter of the water purification filter, then removed the water purification filter, and then measured the outer diameter of the water purification filter. As a result, the present inventors confirmed that the value of the outer diameter of the water purification filter after removal had almost recovered to the value of the outer diameter of the water purification filter before it was stored inside the above-described storage case, that is, the water purification filter has elasticity. Therefore, the water purification filter 10 that is formed by winding a sheet containing fibrous activated carbon, is columnar in shape, and has a hardness of 33 to 59, has elasticity.

The water purification filter 10 has elasticity, and due to the elasticity, it can be stored in a cylindrical storage case (for example, the storage case 20) having an inner diameter smaller than the outer diameter OD11 of the water purification filter 10 by elastic deformation, for example. When stored in the storage case, the water purification filter 10 can prevent raw water from passing through a gap between the outer peripheral surface (side surface 130) of the water purification filter 10 and the inner peripheral surface of the storage case, thereby ensuring that raw water passes through the water purification filter 10. That is, due to the above-described elasticity, the water purification filter 10 can prevent raw water from passing through a gap between the side surface 130 of the water purification filter 10 and the inner peripheral surface of the storage case without requiring any other components, thereby ensuring that the raw water passes through the water purification filter 10.

Due to the above-described elasticity, the water purification filter 10 can be detachably stored in a cylindrical storage case having an inner diameter smaller than the outer diameter OD11 of the water purification filter 10. That is, with the elasticity, the water purification filter 10 can be easily stored in the above-described storage case and easily removed from the above-described storage case. Therefore, only the water purification filter 10 needs to be replaced, and the storage case can be reused. Therefore, the water purification filter 10 can reduce environmental load, compared to conventional water purification filters that are replaced only together with the storage case.

Therefore, the water purification filter 10 has the advantageous effect of being easily attached to and detached from a cylindrical storage case having an inner diameter smaller than the outer diameter OD11 of the water purification filter 10, while ensuring that raw water passes through the water purification filter 10.

The water purification filter 10 according to the present embodiment is stored in the cylindrical storage case 20, and has the outer diameter OD11 that is larger by 1 mm or less than the "inner diameter ID21 (inner diameter ID21(1)) of the storage case 20 at least at one point in the axial direction," which will be described later with reference to Fig. 5. In other words, the outer diameter OD11 of the water purification filter 10 (side surface 130) is larger by 1 mm or less than the "inner diameter ID21 (inner diameter ID21(1)) of the storage case 20 at least at one point in the axial direction."

As described later, the storage case 20 that stores the water purification filter 10 may have a tapered portion 222 in which the inner diameter ID21 increases toward the open end. In this case, the outer diameter OD11 of the water purification filter 10 is larger than the inner diameter ID21(1) at the closed end of the storage case 20 by 1 mm or less. If the inner diameter ID21 of the storage case 20 changes along the axial direction, the outer diameter OD11 of the water purification filter 10 only needs to be larger than the minimum inner diameter ID21(min) of the storage case 20 by 1 mm or less.

However, it is not essential that the storage case 20 include the tapered portion 222, and the storage case 20 may not include the tapered portion 222. If the storage case 20 does not include the tapered portion 222, that is, if the inner diameter ID21 of the storage case 20 is constant throughout the axial direction, the outer diameter OD11 of the water purification filter 10 may be larger than the constant inner diameter ID21 by 1 mm or less. For example, the outer diameter OD11 of the water purification filter 10 may be larger than the constant inner diameter ID21 of the storage case 20 whose inner diameter ID21 is constant throughout the axial direction by 1 mm or less.

Although details will be described later in <6. Various Experiments>, the present inventors confirmed that the water purification filter 10 can be stored in the following storage case 20 without collapsing the activated carbon layer of the water purification filter 10. That is, the present inventors confirmed that the water purification filter 10 can be stored in the cylindrical storage case 20 having the inner diameter ID21 at least 1 mm smaller than the outer diameter of the water purification filter at one point in the axial direction without collapsing the activated carbon layer of the water purification filter 10. Furthermore, the water purification filter 10 stored in the storage case 20 can be easily removed from the storage case 20 by being compressed.

Therefore, the water purification filter 10 has the advantageous effect of being easily attached to and detached from the storage case 20 while ensuring that raw water passes through the water purification filter 10.

The hardness of the water purification filter 10 is lower than that of the storage case 20 and lower than that of the lid body 30. As will be described in detail later, the water purification filter 10 is pressed axially by the storage case 20 and the lid body 30, and in particular is pressed into the storage case 20 by the lid body 30. The water purification filter 10 is stored in the storage case 20 in a compressed (for example, elastically deformed) state, in particular in a radially compressed state. The water purification filter 10, which is disposed between the storage case 20 and the lid body 30 inside the storage case 20, is loaded (stored) in the storage case 20 in a state where it is pressed axially by the storage case 20 and the lid body 30 and compressed (deformed) in the radial direction.

### <3-1. Manufacturing Method of Water Purification Filter>

As described above, the water purification filter 10 is formed by winding a sheet containing fibrous activated carbon, but otherwise there is no particular limitation on the manufacturing method of the water purification filter 10. An example of a manufacturing method of a water purification filter in which a sheet containing fibrous activated carbon is formed in a wound state will be described below.

A manufacturing method of a water purification filter in which a sheet containing fibrous activated carbon is formed in a wound state includes a step of preparing a sheet containing fibrous activated carbon and a step of winding the sheet to obtain a water purification filter. The above-described manufacturing method may also include a step of winding the sheet containing fibrous activated carbon and molding the same to obtain an intermediate molded body, and a step of applying a sealant to the axial end surfaces (corresponding to the upper end surface 110 and the lower end surface 120 of the water purification filter 10) of the obtained intermediate molded body.

In the above-described manufacturing method of a water purification filter, for example, a sheet containing fibrous activated carbon (activated carbon fiber sheet, dry nonwoven fabric) is first wound around a thin resin or metal core. Next, the core is removed, and the hollow portion formed by removing the core is crushed to produce a new core of the above-described sheet. The sheet is then wound around the obtained core under tension to obtain a cylindrical activated carbon molded body of a predetermined thickness. The cylindrical activated carbon molded body of a predetermined thickness may then be placed in a furnace and heat-treated. This heat treatment integrates the stacked sheet layers together.

As described above, the water purification filter 10 may be formed by winding a plurality of "sheets containing fibrous activated carbon" different in thickness (bulk density). Therefore, the above-described "cylindrical activated carbon molded body of a predetermined thickness" may be obtained by winding a plurality of "sheets containing fibrous activated carbon" different in thickness. For example, a plurality of "sheets containing fibrous activated carbon" different in thickness is prepared, and a relatively thick (low-bulk density) "sheet containing fibrous activated carbon" is first wound to a certain diameter to form a core. In this case, the relatively thick sheet may be wound around a thin resin or metal core, and then the core may be removed, and the obtained hollow portion may be crushed to produce a core of the above-described "relatively thick sheet." The above-described "cylindrical activated carbon molded body of a predetermined thickness" may be obtained by winding a relatively thin (high-bulk density) "sheet containing fibrous activated carbon" around the outer periphery of a core (winding core) formed by winding a relatively thick "sheet containing fibrous activated carbon." This method can reduce the difference in bulk density between around the axial center (core region) and the outer periphery (peripheral region) of the "cylindrical activated carbon molded body of a predetermined thickness" (water purification filter 10), thereby preventing one-sided flow of raw water during filtration.

The cylindrical activated carbon molded body having a predetermined thickness is then cut such that the axial height of the activated carbon molded body from the side is a predetermined value (corresponding to a height AH11(B) of the water purification filter 10 (side surface 130) before being stored in the storage case 20), thereby obtaining a cylindrical activated carbon molded body having a desired axial height. The front or back surface of the wound sheet of the cylindrical activated carbon molded body forms the side surface (side surface 130) of the activated carbon molded body (water purification filter 10). In addition, the longitudinal ends of the sheet are arranged in a spiral shape to form the upper surface (upper end surface 110) and lower surface (lower end surface 120) of the activated carbon molded body (water purification filter 10). The water purification filter 10 may be obtained by this manufacturing method.

As described above, a sealant (for example, a hot-melt adhesive) may be applied to the axial end surfaces (corresponding to the upper end surface 110 and lower end surface 120 of the water purification filter 10) of a cut cylindrical activated carbon molded body having a predetermined axial height, to form the upper end surface 110 and lower end surface 120 of the water purification filter 10.

The sheet containing fibrous activated carbon can contain, in addition to fibrous activated carbon (activated carbon fiber), granular activated carbon, zeolite, ion exchange fiber, ion exchange resin, chelating fiber, ceramic, calcium sulfite, hollow fiber, or the like. Among these, from the viewpoint of further improving the antibacterial properties of the sheet containing fibrous activated carbon during storage of the water purifier of the present invention, the sheet preferably contains activated carbon fiber that does not support an antibacterial agent and one or more antibacterial agent-supporting materials selected from the group consisting of activated carbon fiber, granular activated carbon, and zeolite. From the viewpoint of further maintaining the antibacterial properties even after long-term use, the sheet more preferably contains activated carbon fiber that does not support an antibacterial agent and activated carbon fiber or granular activated carbon kneaded with an antibacterial agent. The antibacterial agent kneaded into the activated carbon is preferably one or more metals or metal compounds selected from the group consisting of silver, zinc, and copper, and the metal compound is preferably a metal salt, for example. Examples of silver salts include silver nitrate, silver acetate, silver sulfate, and silver acetylacetonate, examples of zinc salts include zinc nitrate, zinc acetate, and zinc sulfate, and examples of copper salts include copper nitrate, copper acetate, and copper sulfate. Furthermore, the sheet containing fibrous activated carbon preferably contains a binder component, and examples of the binder component include pulp and heat-fusible fibers.

### (Axial Height of Water Purification Filter)

The axial height AH11 of the water purification filter 10 (side surface 130) according to the present embodiment is equal to an axial height AH22 of an "internal space (first internal space 230) of the storage case 20 that stores the water purification filter 10," which will be described later with reference to Fig. 5. In particular, the axial height AH11(B) of the water purification filter 10 before being stored in the storage case 20 is equal to the axial height AH22 of the first internal space 230 of the storage case 20.

However, the axial height AH11(B) of the water purification filter 10 (side surface 130) before being stored in the storage case 20 may be greater than the axial height AH22 of the first internal space 230 of the storage case 20. For example, the axial height AH11(B) of the water purification filter 10 before being stored in the storage case 20 may be greater by 1 mm or less than the axial height AH22 of the first internal space 230 of the storage case 20. In other words, before being stored in the storage case 20, the axial distance between the upper end surface 110 and the lower end surface 120 of the water purification filter 10 may be greater by 1 mm or less than the height AH22 of the first internal space 230 of the storage case 20.

As described above, the hardness of the water purification filter 10 is 33 to 59, and the water purification filter 10 is compressible (deformable). In particular, the water purification filter 10 has elasticity, that is, is elastically deformable. Therefore, the water purification filter 10 can be stored in the first internal space 230 (the first internal space 230 of the storage case 20) having the axial height AH22 smaller than the "axial height AH11(B) of the water purification filter 10" by compressing (elastically deforming) the water purification filter 10 in the axial direction, for example. In other words, by compressing (elastically deforming) the water purification filter 10 that has the height AH11(B) larger than the height AH22 of the first internal space 230 of the storage case 20, the water purification filter 10 can be stored in the first internal space 230 of the storage case 20.

Since the water purification filter 10 has elasticity, when the open end of the storage case 20 storing the water purification filter 10 in the first internal space 230 is closed with the lid body 30 and then the lid body 30 is removed from the storage case 20, the following event occurs. That is, since the water purification filter 10 has elasticity, the axial height AH11(A) of the water purification filter 10 after the lid body 30 is removed substantially returns to the axial height AH11(B) of the water purification filter 10 before being stored in the storage case 20. As described above, the axial height AH22 of the first internal space 230 is smaller than the axial height AH11(B) of the water purification filter 10 before being stored in the storage case 20. Therefore, after the open end of the storage case 20 storing the water purification filter 10 in the first internal space 230 is closed with the lid body 30, when the lid body 30 is removed from the storage case 20, a portion of the water purification filter 10 will protrude outside the open end of the storage case 20.

Therefore, a user of the water purification cartridge 1 can easily remove the water purification filter 10 stored in the storage case 20, from the storage case 20 by using the portion of the water purification filter 10 that protrudes outside the open end of the storage case 20. For example, a user of the water purification cartridge 1 can easily remove the water purification filter 10 stored in the storage case 20, from the storage case 20 by hooking a fingernail on the portion of the water purification filter 10 that protrudes outside the open end of the storage case 20.

However, it is not essential that the height AH11(B) of the water purification filter 10 before being stored in the storage case 20 be greater than the height AH22 of the first internal space 230 of the storage case 20. The height AH11(B) of the water purification filter 10 before being stored in the storage case 20 may be the same as the height AH22 of the first internal space 230 of the storage case 20. That is, the axial height AH22 of the first internal space 230 of the storage case 20 may be equal to the axial height AH11(B) of the water purification filter 10 (side surface 130) before being stored in the storage case 20. Furthermore, the height AH11(B) of the water purification filter 10 before being stored in the storage case 20 may be smaller than the height AH22 of the first internal space 230 of the storage case 20.

### <4. Storage case>

Fig. 5 is a diagram schematically illustrating an example of the main configuration of the storage case 20 according to the present embodiment. Specifically, Fig. 5(A) is a schematic cross-sectional view of an example of the main configuration of the storage case 20. That is, Fig. 5(A) schematically illustrates the cross-sectional configuration of the storage case 20 parallel to and tangent to the axis (axial line) of the storage case 20. Fig. 5(B) is a schematic bottom view of an example of the main configuration of the storage case 20.

The storage case 20 is a cylindrical member that removably stores the water purification filter 10. The storage case 20 is made of a plastic material, for example, and its hardness is higher (greater) than that of the water purification filter 10. In other words, the storage case 20 is harder than the water purification filter 10.

As illustrated in Fig. 5, the storage case 20 includes a cylindrical first peripheral wall portion 220 and a disk-shaped first surface portion 210. One axial end (the upper end in the illustrated example) of the first peripheral wall portion 220 is open, and the other axial end (the lower end in the illustrated example) is closed by the first surface portion 210. That is, the storage case 20 includes the first peripheral wall portion 220 and the first surface portion 210. For example, the first surface portion 210 of the storage case 20 is in contact with the lower end surface 120 of the water purification filter 10, and the water purification filter 10 is pressed axially by the first surface portion 210 while being compressed (elastically deformed) in the radial direction. The first peripheral wall portion 220 of the storage case 20 (particularly, its inner peripheral surface) is in contact with the side surface 130 (outer peripheral surface) of the water purification filter 10.

As illustrated in Fig. 5(B), the first surface portion 210 has one or more openings as the first water flow portion 211 through which purified water flows out. Also, as illustrated in Fig. 5(A), the male thread portion 221 is provided on the outer peripheral surface of the first peripheral wall portion 220.

In the storage case 20, the first peripheral wall portion 220 and the first surface portion 210 form the columnar first internal space 230 that is open at one end (the upper end in the illustrated example), and the water purification filter 10 is removably stored in the first internal space 230. That is, the water purification filter 10 is inserted into the first peripheral wall portion 220 (that is, the first internal space 230) from the open end (the upper end in the illustrated example) of the storage case 20, and is removably stored in the first internal space 230.

In the first peripheral wall portion 220, the inner diameter ID21(1) at least at the end portion (the lower end in the illustrated example) closed by the first surface portion 210 is smaller by 1 mm or less than the outer diameter OD11 of the water purification filter 10.

In the storage case 20 illustrated in Fig. 5, the first peripheral wall portion 220 has the tapered portion 222 in which the inner diameter ID21 increases toward the open end (the upper end in the illustrated example). The inner diameter ID21(1) of the first peripheral wall portion 220, at least at the lower end closed by the first surface portion 210, is smaller by 1 mm or less than the outer diameter OD11 of the water purification filter 10. However, the tapered portion 222 is not essential for the storage case 20, and the storage case 20 may not have the tapered portion 222. If the storage case 20 does not have the tapered portion 222, that is, if the inner diameter ID21 of the storage case 20 is constant throughout the axial direction, the outer diameter OD11 of the water purification filter 10 will be larger by 1 mm or less than the constant inner diameter ID21.

As described above, the first peripheral wall portion 220 of the storage case 20 may be formed with the tapered portion 222 in which the inner diameter ID21 increases toward the open end (the upper end in the illustrated example). That is, in the example illustrated in Fig. 5(A), the inner diameter ID21(2) at the open upper end of the storage case 20 is larger than the inner diameter ID21(1) at the lower end closed by the first surface portion 210.

The inner diameter ID21(2) at the open upper end of the storage case 20 may be larger than the outer diameter OD11 of the water purification filter 10. By making the inner diameter ID21(2) at the upper end of the storage case 20 larger than the outer diameter OD11 of the water purification filter 10, it is easier to insert the water purification filter 10 into the first internal space 230 from the open upper end of the storage case 20.

However, the inner diameter ID21(2) at the upper end of the storage case 20 may be the same as the outer diameter OD11 of the water purification filter 10, or may be smaller than the outer diameter OD11 of the water purification filter 10. The inner diameter ID21(2) at the upper end only needs to be larger than the inner diameter ID21(1) at the lower end. The inner diameter ID21(1) at the end of the storage case 20 closed by the first surface portion 210 only needs to be smaller by 1 mm or less than the outer diameter OD11 of the water purification filter 10.

The storage case 20 (water purification cartridge 1) has the tapered portion 222 in the first peripheral wall portion 220 in which the inner diameter ID21 increases toward the open end, thereby achieving the following advantageous effect. That is, the water purification cartridge 1 makes it easy to insert the water purification filter 10 into the storage case 20 (first internal space 230) from the open end of the storage case 20 (the upper end in the illustrated example).

However, it is not essential for the storage case 20 to have the tapered portion 222 formed on the first peripheral wall portion 220. The inner diameter ID21 of the storage case 20 may be constant, and for example, the inner diameter ID21 of the storage case 20 (first internal space 230) may be equal between the upper end and the lower end in the axial direction.

In the storage case 20 illustrated in Fig. 5, the axial height AH22 of the first internal space 230 is equal to the axial height AH11(B) of the water purification filter 10 before being stored in the storage case 20. Therefore, the second surface portion 310 of the lid body 30, which will be described later with reference to Fig. 6, is in contact with one axial end surface (upper end surface 110) of the water purification filter 10 that is removably stored in the storage case 20. The second surface portion 310 of the lid body 30 closes the open end (the upper end in the illustrated example) of the storage case 20 that stores the water purification filter 10, and presses the water purification filter 10 in the axial direction, forcing the water purification filter 10 into the first internal space 230 of the storage case 20. That is, the lid body 30 uses the second surface portion 310 to close the open end of the storage case 20, while using the second surface portion 310 to press the water purification filter 10 axially (from top to bottom in the illustrated example) into the first internal space 230 of the storage case 20.

However, as described above, the axial height AH22 of the first internal space 230 may be smaller than the axial height AH11(B) of the water purification filter 10 before being stored in the storage case 20. By adopting such a configuration, when the open end of the storage case 20 storing the water purification filter 10 in the first internal space 230 is closed with the lid body 30 and then the lid body 30 is removed from the storage case 20, a portion of the water purification filter 10 protrudes outside the open end of the storage case 20. That is, as described above, since the water purification filter 10 has elasticity, the axial height AH11(A) of the water purification filter 10 after the lid body 30 is removed nearly returns to the axial height AH11(B) of the water purification filter 10 before being stored in the storage case 20. As described above, the axial height AH22 of the first internal space 230 is smaller than the axial height AH11(B) of the water purification filter 10 before being stored in the storage case 20. Therefore, when the lid body 30 is removed from the storage case 20, a portion of the water purification filter 10 protrudes outside the open end of the storage case 20. Therefore, a user of the water purification cartridge 1 can easily remove the water purification filter 10 stored in the storage case 20, from the storage case 20 by using the portion of the water purification filter 10 protruding outside the open end of the storage case 20.

However, it is not essential that the axial height AH22 of the first internal space 230 in the storage case 20 be smaller than the axial height AH11(B) of the water purification filter 10 before being stored in the storage case 20. The axial height AH22 of the first internal space 230 may be the same as the axial height AH11(B) of the water purification filter 10 before being stored in the storage case 20. Furthermore, the axial height AH22 of the first internal space 230 may be greater than the axial height AH11(B) of the water purification filter 10 before being stored in the storage case 20.

An axial height AH21 of the storage case 20 (first peripheral wall portion 220) is obtained by adding the thickness (axial thickness) of the first surface portion 210 to the height AH22 of the first internal space 230 of the storage case 20. The axial height AH21 of the storage case 20 is equal to an axial height AH32 of a second internal space 330 of the lid body 30, which will be described later with reference to Fig. 6. Therefore, the storage case 20 is stored in the second internal space 330 of the lid body 30 such that the axially outer peripheral surface (the lower side in the illustrated example) of the first surface portion 210 of the storage case 20 and the axially outer peripheral surface of a second peripheral wall portion 320 of the lid body 30 are smoothly continuous with no gaps. Furthermore, the storage case 20 is stored in the second internal space 330 of the lid body 30 with the open end of the storage case 20 (first internal space 230) closed by the second surface portion 310 of the lid body 30.

An outer diameter OD21 illustrated in Fig. 5 is the outer diameter (radial length) of the storage case 20 (first peripheral wall portion 220), and is obtained by adding the thickness of the first peripheral wall portion 220 to the inner diameter ID21 of the storage case 20 (first peripheral wall portion 220). The outer diameter OD21 of the storage case 20 is equal to an inner diameter ID31 of the second internal space 330 of the lid body 30, which will be described later. Therefore, in the water purification cartridge 1, the outer peripheral surface of the storage case 20 (first peripheral wall portion 220) is in contact with the inner peripheral surface of the lid body 30 (second peripheral wall portion 320) without any gaps.

### <5. Lid Body>

Fig. 6 is a diagram schematically illustrating an example of the main configuration of the lid body 30 according to the present embodiment. Specifically, Fig. 6(A) is a schematic cross-sectional view of an example of the main configuration of the lid body 30. That is, Fig. 6(A) schematically illustrates the cross-sectional configuration of the lid body 30 parallel to and tangent to the axis (axial line) of the lid body 30. Fig. 6(B) is a schematic top view of an example of the main configuration of the lid body 30.

The lid body 30 is a cylindrical member that is detachably attached to the storage case 20 and closes the open end (the upper end in the illustrated example) of the storage case 20 that stores the water purification filter 10 inside (the first internal space 230). The lid body 30 is made of a plastic material, for example, and its hardness is higher (greater) than that of the water purification filter 10, that is, the lid body 30 is harder than the water purification filter 10.

As illustrated in Fig. 6, the lid body 30 includes the cylindrical second peripheral wall portion 320 and the disk-shaped second surface portion 310. One axial end (the lower end in the illustrated example) of the second peripheral wall portion 320 is open, and the other axial end (the upper end in the illustrated example) is closed by the second surface portion 310. That is, the lid body 30 includes the second peripheral wall portion 320 and the second surface portion 310. For example, the second surface portion 310 of the lid body 30 is in contact with the upper end surface 110 of the water purification filter 10, and the water purification filter 10 is pressed axially by the second surface portion 310 while being compressed (elastically deformed) in the radial direction. Furthermore, the second peripheral wall portion 320 of the lid body 30 (particularly, its inner peripheral surface) is in contact with the outer peripheral surface of the storage case 20 (the first peripheral wall portion 220).

As illustrated in Fig. 6(B), the second surface portion 310 has one or more openings as second flow portions 311 through which raw water flows in. As illustrated in Fig. 6(A), the inner peripheral surface of the second peripheral wall portion 320 has the female thread portion 321.

In the lid body 30, the second peripheral wall portion 320 and the second surface portion 310 form the columnar second internal space 330 with one end (the lower end in the illustrated example) open, and the entire storage case 20 storing the water purification filter 10 is stored in the second internal space 330 in a removable manner.

Specifically, the storage case 20 with the water purification filter 10 inserted into the first peripheral wall portion 220 (first internal space 230) is stored in the second internal space 330 of the lid body 30 from the side of the open end (the lower end in the illustrated example) of the lid body 30. The lid body 30 is detachably attached to the storage case 20 such that the second surface portion 310 closes the open end of the storage case 20 with the water purification filter 10 stored in the first internal space 230.

As illustrated in Fig. 6, the first protrusion 313 that protrudes axially outward may be provided on the axially outer peripheral surface (the upper side in the illustrated example) of the second surface portion 310 of the lid body 30. The water purification cartridge 1 allows a user of the water purification cartridge 1 to use the first protrusion 313 of the lid body 30 as a knob to easily remove the water purification cartridge 1 from the container 2 to which the water purification cartridge 1 is attached.

As illustrated in Fig. 6, the inner peripheral surface of the second surface portion 310 of the lid body 30 may be provided with a second protrusion 312 that protrudes toward the inside of the lid body 30. That is, the second protrusion 312 that protrudes inwardly in the axial direction may be provided on the axially inner peripheral surface (the lower side in the illustrated example) of the second surface portion 310. In the example illustrated in Fig. 6, a plurality of second protrusions 312 are formed on the inner peripheral surface of the second surface portion 310 at predetermined angles to each other in the circumferential direction (every 90 degrees in the illustrated example).

The lid body 30 has the second protrusions 312 on the inner peripheral surface of the second surface portion 310, which provides the following advantageous effect compared to a case where the second protrusions 312 are not provided on the inner peripheral surface of the second surface portion 310. That is, the second protrusions 312 provided on the inner peripheral surface of the second surface portion 310 allow the lid body 30 to press the water purification filter 10 stored in the storage case 20 (first internal space 230) more strongly in the axial direction than a case where the second protrusions 312 are not provided.

However, it is not essential for the lid body 30 to have the second protrusions 312 on the inner peripheral surface of the second surface portion 310. The inner surface of the second surface portion 310 does not necessarily have to have the second protrusions 312 that protrude toward the inside of the lid body 30.

The axial height AH32 of the second internal space 330 of the lid body 30 is equal to the axial height AH21 of the storage case 20 (first peripheral wall portion 220). Therefore, the storage case 20 is stored in the second internal space 330 of the lid body 30 such that the axially outer peripheral surface (the lower side in the illustrated example) of the first surface portion 210 of the storage case 20 and the axially outer peripheral surface of the second peripheral wall portion 320 of the lid body 30 are smoothly continuous without any gaps. For example, when the male thread portion 221 of the storage case 20 is screwed into the female thread portion 321 of the lid body 30, the entire storage case 20 storing the water purification filter 10 is stored in the second internal space 330 of the lid body 30.

The inner diameter ID31 of the second internal space 330 of the lid body 30 is equal to the outer diameter OD21 of the storage case 20 (first peripheral wall portion 220). Therefore, in the water purification cartridge 1, the outer peripheral surface of the storage case 20 (first peripheral wall portion 220) and the inner peripheral surface of the lid body 30 (second peripheral wall portion 320) are in contact with each other without any gaps.

An axial height AH31 of the lid body 30 is obtained by adding the thickness (axial thickness) of the second surface portion 310 to the axial height AH32 of the second internal space 330 of the lid body 30. The axial height AH31 of the lid body 30 is equal to the axial depth of the opening S4 formed in the bottom of the tank TK in Fig. 1, for example. Therefore, the water purification cartridge 1 is attached to the tank TK (container 2) such that the axially outer surface (upper side in the illustrated example) of the lid body 30 (second surface portion 310) and the axially inner surface (upper side in the example illustrated in Fig. 1) of the bottom of the tank TK are smoothly continuous without any gaps.

### <6. Various Experiments>

The present inventors conducted the following first and second experiments to confirm the physical properties of the water purification filter 10.

### <6-1. First Experiment (Hardness)>

As described above, the water purification filter 10 is formed by winding a sheet containing fibrous activated carbon, for example. Therefore, the present inventors wound a sheet containing fibrous activated carbon to create a plurality of columnar water purification filters 10 (a plurality of water purification filters 10 according to Examples 1 to 5 below). The outer diameters OD11 (particularly, the outer diameters OD11(B) before being stored in a storage case) of the plurality of water purification filters 10 (wound filters) according to Examples were all 52.8 mm. The axial heights AH11 (particularly, the axial heights AH11(B) before being stored in a storage case) of the plurality of water purification filters 10 according to Examples were all 21.5 mm. Because the plurality of water purification filters 10 according to Examples were all columnar in shape, their inner diameters were 0 mm.

The present inventors also created the following water purification filters as Comparative Example for comparison with Examples described above (water purification filters 10). That is, the present inventors created a plurality of cylindrical water purification filters as Comparative Example using granular activated carbon by a wet molding method. The outer diameters of the water purification filters according to Comparative Example (particularly, the outer diameters before being stored in a storage case) were all 56.9 mm. The axial heights of the water purification filters according to Comparative Example (particularly, the axial heights before being stored in a storage case) were all 80.0 mm. Furthermore, the inner diameters of the cylindrical water purification filters according to Comparative Example were all 41.0 mm.

The outlines of Examples and Comparative Example described above are summarized in Table 1 below.

### [Table 1]

**(Table 1)**

| | Example 1 | Example 2 | Example 3 | Example 4 | Example 5 | Comparative Example |
|---|---|---|---|---|---|---|
| Configuration | Wound filter | | | | | Wet molding (granular carbon) |
| Outer diameter (mm) | 52.8 | 52.8 | 52.8 | 52.8 | 52.8 | 56.9 |
| Total length (mm) | 21.5 | 21.5 | 21.5 | 21.5 | 21.5 | 80.0 |
| * Inner diameter (mm) | 0 | 0 | 0 | 0 | 0 | 41.0 |

The present inventors measured the hardnesses of Examples and Comparative Example described above using the following method. That is, hardness measurements were performed by the method specified in JIS S 6050 "Plastic Eraser" using a TECLOCK hardness tester GS701G, and the average values for N = 5 were set as the hardnesses of Examples and Comparative Example. As a result, the hardnesses of the water purification filters 10 according to Examples were between 33 and 59. Specifically, the hardness of the water purification filter 10 according to Example 4 was 59, and the hardness of the water purification filter 10 according to Example 5 was 33. Similarly, the hardness of the cylindrical water purification filter according to Comparative Example (produced by a wet molding method using granular activated carbon) was 83. The hardnesses of Examples and Comparative Example are summarized in Table 2 below. The water purification filters 10 of Examples 1 to 5 were constructed to have the following hardnesses and outer diameters by adjusting the tension and winding length of the sheet containing fibrous activated carbon.

### [Table 2]

**(Table 2)**

| | Example 1 | Example 2 | Example 3 | Example 4 | Example 5 | Comparative Example |
|---|---|---|---|---|---|---|
| Hardness | 52 | 40 | 49 | 59 | 33 | 83 |

Through the first experiment described above, the present inventors confirmed that the columnar water purification filter 10 including an activated carbon layer and having a hardness of 33 to 59 measured by the above-described measurement method can be produced by winding a sheet including fibrous activated carbon. The present inventors also confirmed that the water purification filter 10 formed by winding a sheet including fibrous activated carbon can have a lower hardness than a cylindrical water purification filter (Comparative Example) produced by a wet molding method using granular activated carbon.

### <6-2. Second Experiment (Elasticity)>

The present inventors further conducted a second experiment to confirm whether Examples and Comparative Example created in the first experiment had elasticity and whether they could be stored in a storage case having an inner diameter smaller than their outer diameters.

Specifically, first, the water purification filters according to Examples and Comparative Example created in the first experiment were prepared. In addition, a cylindrical storage case was prepared, the inner diameter of which was 1 mm smaller than the outer diameter of each water purification filter, and the axial height of the internal space was the same as the axial height of each water purification filter.

As described above, the outer diameters OD11 (particularly, the outer diameter OD11(B) before being stored in a storage case) of the water purification filters 10 according to Examples were 52.8 mm. The axial heights AH11 (particularly, the axial heights AH11(B) before being stored in a storage case) of the water purification filters 10 according to Examples were 21.5 mm. Therefore, the inner diameter ID21 of the storage case (storage case 20) to store the water purification filter 10 inside (the first internal space 230) was set to be 1 mm smaller than the outer diameter OD11 of each water purification filter 10. That is, the inner diameter ID21 of the storage case 20 was set to 51.8 mm. The axial height AH22 of the first internal space 230 of the storage case 20 was set to be the same as the axial height AH11 of each water purification filter 10. That is, the height AH22 of the storage case 20 was set to 21.5 mm.

As described above, the outer diameter (particularly, the outer diameter (B) before being stored in a storage case) of the cylindrical water purification filter according to Comparative Example produced by a wet molding method using granular activated carbon was 56.9 mm. The axial height (particularly, the axial height (B) before being stored in a storage case) of the water purification filter according to Comparative Example was 80.0 mm. Therefore, the inner diameter ID of the storage case (hereinafter referred to as "comparative storage case") storing the water purification filter according to Comparative Example was set to be 1 mm smaller than the outer diameter of the water purification filter according to Comparative Example, that is, the inner diameter ID of the comparative storage case was set to 55.9 mm. The axial height of the internal space of the storage case according to Comparative Example was set to be the same as the axial height of the water purification filter according to Comparative Example, that is, the axial height of the internal space of the storage case according to Comparative Example was set to 80.0 mm.

The present inventors confirmed whether each of Examples and Comparative Example could be stored in the storage case described above. That is, the present inventors confirmed whether the water purification filter 10 according to each Example, which had an outer diameter OD11(B) of 52.8 mm, could be stored in the first internal space 230 of the storage case 20, which had an inner diameter ID21 of 51.8 mm. The present inventors also confirmed whether the water purification filter according to Comparative Example, which had an outer diameter (B) of 56.9 mm, could be stored in the internal space of the storage case according to Comparative Example, which had an inner diameter ID of 55.9 mm. As described above, in each of Examples and Comparative Examples, the difference between the outer diameters of the water purification filter before and after being stored in the storage case (the amount of compression of the outer diameter when installed) was 1.0 mm.

As a result, the present inventors confirmed that the water purification filter 10 according to each Example could be loaded (stored) into the first internal space 230 of the storage case 20 while being compressed. Further, when the water purification filter 10 according to each Example was temporarily stored in the first internal space 230 of the storage case 20 and then removed, the value of the outer diameter OD11(A) after removal (52.4 to 52.7 mm) was almost equal to the value of the outer diameter OD11(B) before storage (52.8 mm). The present inventors confirmed that the value of the outer diameter OD11(A) after removal of the water purification filter 10 according to each Example recovered to the value of the outer diameter OD11(B) before storage in the range of "0 mm" to "1.0 mm." That is, the present inventors confirmed that, for the water purification filter 10 according to each Example, the difference between the outer diameter OD11(A) after removal and the outer diameter OD11(B) before storage was in the range of 0 mm to 1.0 mm (0 mm or more and less than 1.0 mm). The present inventors confirmed that when the water purification filter 10 according to each Example was removed from the first internal space 230 of the storage case 20, the outer diameter OD11(A) after removal nearly returned to the outer diameter OD11(B) before storage, and that the water purification filter 10 according to each Example had elasticity.

In contrast, the cylindrical water purification filter according to Comparative Example, which was produced by a wet molding method using granular activated carbon, could not be loaded (stored in the internal space of the comparative storage case) while being compressed. Specifically, the present inventors confirmed that the water purification filter according to Comparative Example could not be compressed (deformed), and that the activated carbon layer became collapsed when attempting to press it into the internal space of the comparative storage case. Further, when the water purification filter according to Comparative Example was temporarily stored in the internal space of the comparative storage case and then removed, the value of the outer diameter (A) after removal did not recover to the value of the outer diameter (B) (56.9 mm) before storage, and was equal to the inner diameter ID (55.9 mm) of the comparative storage case. The present inventors confirmed that, when removed from the internal space of the comparative storage case, the value of the outer diameter (A) of the water purification filter according to Comparative Example after removal did not recover to the value of the outer diameter (B) before storage, and that the water purification filter according to Comparative Example did not have elasticity. The outlines and results of the second experiment described above are summarized in Table 3 below.

### [Table 3]

**(Table 3)**

| | Example 1 | Example 2 | Example 3 | Example 4 | Example 5 | Comparative Example |
|---|---|---|---|---|---|---|
| Filter outer diameter B (mm) | 52.8 | 52.8 | 52.8 | 52.8 | 52.8 | 56.9 |
| Casing outer diameter ID (mm) | 51.8 | 51.8 | 51.8 | 51.8 | 51.8 | 55.9 |
| Outer diameter compression amount B-ID (mm) when being loaded | 1.0 | 1.0 | 1.0 | 1.0 | 1.0 | 1.0 |
| Possibility of loading | Possible | Possible | Possible | Possible | Possible | Not possible |

| Status | The filter enters the casing while being compressed in the outer diameter direction. | | | | | The filter cannot be compressed and the activated carbon layer becomes collapsed. |
|---|---|---|---|---|---|---|
| Filter outer diameter A (mm) after removing the casing | 52.6 | 52.6 | 52.7 | 52.5 | 52.4 | |

Through the second experiment illustrated in Table 3, the present inventors confirmed that the columnar water purification filter 10 formed by winding a sheet containing fibrous activated carbon and having a hardness of 33 to 59 had elasticity. The present inventors also confirmed that the water purification filter 10 could be stored in the first internal space 230 of the storage case 20, whose inner diameter ID 21 was 1 mm smaller than the outer diameter OD 11 (B) of the water purification filter 10 before being stored in the storage case 20. For example, the water purification filter 10 according to Example 4, which had a hardness of "59," and the water purification filter 10 according to Example 5, which had a hardness of "33," both had elasticity and could be stored in the storage case 20 by compressing (deforming). In contrast, the water purification filter according to Comparative Example, which had a hardness of "83," did not have elasticity and could not be compressed and stored in the comparative storage case. That is, the present inventors confirmed that there is a significant difference between the water purification filters 10 according to Examples 4 and 5, which had elasticity, and the water purification filter according to Comparative Example, which did not have elasticity. The present inventors also confirmed that there is a significant difference between the water purification filters 10 according to Examples 4 and 5 and the water purification filter according to Comparative Example, in that the water purification filters 10 according to Examples 4 and 5 could be compressed and stored, whereas the water purification filter according to Comparative Example could not be compressed or stored.

As described above, the water purification filter 10 can be stored in the first internal space 230 of the storage case 20 whose inner diameter ID21 is smaller by 1 mm than the outer diameter OD11(B) of the water purification filter 10 before being stored in the storage case 20. Therefore, the water purification filter 10 can naturally be stored in the first internal space 230 of the storage case 20 whose inner diameter ID21 is smaller by 1 mm or less than the outer diameter OD11(B) of the water purification filter 10 before being stored in the storage case 20. That is, the inner diameter ID21 of the storage case 20 that stores the water purification filter 10 in the first internal space 230 may be larger than the inner diameter ID21 of the storage case 20 used in the second experiment described above. The inner diameter ID21 of the storage case 20 capable of storing the water purification filter 10 in the first internal space 230 may be smaller than the outer diameter OD11(B) of the water purification filter 10 in the range of 1 mm or less, and may be smaller by 0.1 mm or 0.5 mm, for example. As with the storage case used in the second experiment described above, the inner diameter ID21 of the storage case 20 may be smaller by 1 mm than the outer diameter OD11(B) of the water purification filter 10.

### <7. How to Assemble Water Purification Cartridge>

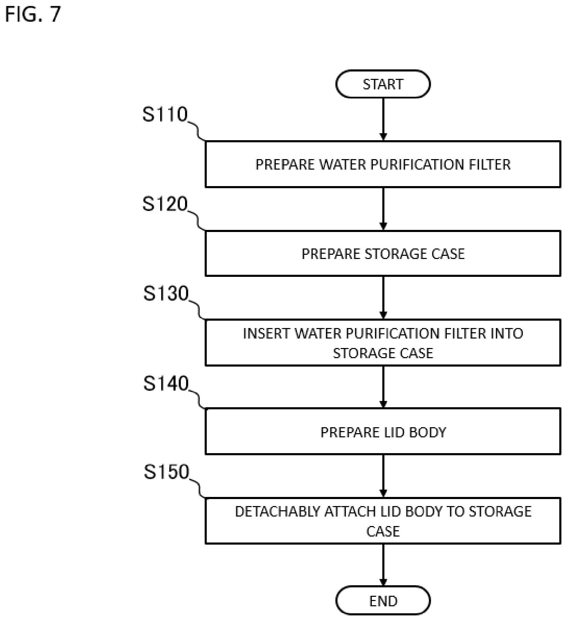

Fig. 7 is a flowchart illustrating an example of an execution procedure of an assembly method according to the present embodiment. The execution procedure described below is an example of a "method of assembling a water purification cartridge" of the present invention. The water purification cartridge 1 is assembled through the following steps (procedure) illustrated in Fig. 7, for example.

### (Step S110: Step of Preparing Water Purification Filter)

In step S110, the water purification filter 10 is prepared. As described above, the water purification filter 10 is formed by winding a sheet containing fibrous activated carbon, is columnar in shape, and has a hardness of 33 to 59. The water purification filter 10 can be compressed (deformed), and can be easily compressed by human force, for example.

### (Step S120: Step of Preparing Storage Case)

In step S120, the storage case 20 is prepared. The storage case 20 is a cylindrical case that removably stores the water purification filter 10. Specifically, the storage case 20 has the cylindrical first peripheral wall portion 220, one axial end of which is open and the other end is closed by the first surface portion 210. The inner diameter ID21(1) of at least the end of the first peripheral wall portion 220 that is closed by the first surface portion 210 is smaller by 1 mm or less than the outer diameter OD11 of the water purification filter 10. That is, the inner diameter ID21(1) of at least the end of the first peripheral wall portion 220 that is closed by the first surface portion 210 is smaller than the outer diameter OD11(B) of the water purification filter 10 before being stored in the storage case by 1 mm or less. The first surface portion 210 also has the first water flow portion 211 through which purified water flows out and raw water flows in.

### (Step S130: Step of Inserting Water Purification Filter into Storage Case)

In step S130, the water purification filter 10 is inserted into the first peripheral wall portion 220 (first internal space 230) of the storage case 20 from the open end of the storage case 20. In step S130, at least a portion of the water purification filter 10 in the axial direction may be inserted into the storage case 20. In step S130, for example, a portion of the lower end of the water purification filter 10 (at least a portion of the lower end surface 120 side in the axial direction) may be inserted into the storage case 20. In step S130, the entire water purification filter 10 does not have to be stored into the storage case 20 (first internal space 230). In the assembly method according to the present embodiment, in step S150 (a step of attaching the lid body to the storage case), the lid body 30 may be detachably attached to the storage case 20, and the water purification filter 10 may be pressed into the storage case 20 using the lid body 30. The water purification filter 10 may be stored into the storage case 20 by pressing the water purification filter 10 into the storage case 20 using the lid body 30. Step S150 will be described in detail later.

### (Step S140: Step of Preparing Lid body)

In step S140, the lid body 30 is prepared. The lid body 30 is a cylindrical member that is detachably attached to the storage case 20 and closes the open end (the upper end in the illustrated example) of the storage case 20 with the water purification filter 10 stored inside (the first internal space 230). Specifically, the lid body 30 has the cylindrical second peripheral wall portion 320, one axial end (the lower end in the illustrated example) of the second peripheral wall portion 320 being open, and the other axial end (the upper end in the illustrated example) being closed by the second surface portion 310. The second surface portion 310 is provided with the second water flow portion 311 through which raw water flows in or purified water flows out.

### (Step S150: Step of Attaching Lid Body to Storage Case)

In step S150, the storage case 20 with the water purification filter 10 inserted from the open end side of the lid body 30 into the first peripheral wall portion 220 (first internal space 230) is stored inside the lid body 30 (second internal space 330). Additionally, in step S150, the lid body 30 is detachably attached to the storage case 20 such that the open end of the storage case 20 is closed by the second surface portion 310 of the lid body 30. That is, in step S150, the storage case 20 with the water purification filter 10 inserted therein is stored inside the lid body 30, while the lid body 30 is detachably attached to the storage case 20. For example, the water purification filter 10 is pressed into the storage case 20 by the lid body 30 to store the water purification filter 10 inside the storage case 20, and the open end of the storage case 20 with the water purification filter 10 stored inside is closed by the lid body 30.

As described above, the water purification filter 10 is formed by winding a sheet containing fibrous activated carbon, is columnar in shape, has a hardness of 33 to 59, and is compressible (deformable). The water purification filter 10 with a hardness of 33 to 59 can be compressed (easily compressed) by human force, for example. The storage case 20 is cylindrical in shape and has the inner diameter ID21 (particularly, inner diameter ID21(1)) that is smaller than the outer diameter OD11 (OD11(B)) of the water purification filter 10. Furthermore, the lid body 30 is detachably attached to the storage case 20 so as to close the open end of the storage case 20, which stores the water purification filter 10 in a removable manner.

The assembly method includes compressing the water purification filter 10, thereby enabling the water purification filter 10 to be easily stored in the storage case 20 having the inner diameter ID21 smaller than the outer diameter OD11 of the water purification filter 10. According to the assembly method, the water purification filter 10 is compressed and stored in the storage case 20, thereby bringing the side surface 130 of the water purification filter 10 into contact with the inner peripheral surface of the storage case 20 (first peripheral wall portion 220) without any gaps. According to the assembly method, the side surface 130 of the water purification filter 10 is brought into contact with the inner peripheral surface of the storage case 20 (first peripheral wall portion 220) without any gaps at least at the end of the storage case 20 closed by the first surface portion 210.

Therefore, the assembly method can provide the water purification cartridge 1 that prevents raw water from passing through a gap between the side surface 130 of the water purification filter 10 and the inner peripheral surface of the storage case 20 by storing the water purification filter 10 in the storage case 20, thereby ensuring that raw water passes through the water purification filter 10. Furthermore, according to the assembly method, the water purification filter 10 can be compressed and easily stored in the storage case 20, and the lid body 30 can be detachably attached to the storage case 20 storing the water purification filter 10 therein. Furthermore, the water purification cartridge 1 assembled by the assembly method can allow the lid body 30 to be easily removed from the storage case 20, and the water purification filter 10 can also be easily removed from the storage case 20.

Therefore, the assembly method has the advantageous effect of providing the water purification cartridge 1 in which the water purification filter 10 can be easily attached to and detached from the storage case 20 while ensuring that raw water passes through the water purification filter 10 by using the water purification filter 10 and the storage case 20.

In step S150, the water purification filter 10 is pressed into the storage case 20 (first internal space 230) by the second surface portion 310 of the lid body 30, and the water purification filter 10 is stored into the first peripheral wall portion 220 of the storage case 20 (first internal space 230).

According to the assembly method, in step S150, the water purification filter 10 is stored in the storage case 20 by pressing the water purification filter 10 into the storage case 20 using the second surface portion 310 of the lid body 30. That is, according to the assembly method, the lid body 30 is attached to the storage case 20 while pressing the water purification filter 10 into the storage case 20 using the second surface portion 310 of the lid body 30. Therefore, the assembly method allows the water purification filter 10 to be easily stored in the storage case 20 by pressing the water purification filter 10 into the storage case 20 using the lid body 30 at the same time as attaching the lid body 30 to the storage case 20.

As described above, the male thread portion 221 is provided on the outer peripheral surface of the first peripheral wall portion 220 of the storage case 20, and the female thread portion 321 is provided on the inner peripheral surface of the second peripheral wall portion 320 of the lid body 30. In step S150, the male thread portion 221 and the female thread portion 321 are screwed together, whereby the lid body 30 is detachably attached to the storage case 20 while the water purification filter 10 is pressed into the interior of the storage case 20 by the second surface portion 310 of the lid body 30.

According to the assembly method, in step S150, the lid body 30 is attached to the storage case 20 while the water purification filter 10 is pressed into the storage case 20 by screwing the male thread portion 221 into the female thread portion 321. Therefore, according to the assembly method, the water purification filter 10 is gradually pressed into the storage case 20 by the lid body 30, as the lid body 30 is attached to the storage case 20, thereby making it possible to easily and reliably store the water purification filter 10 in the storage case 20.

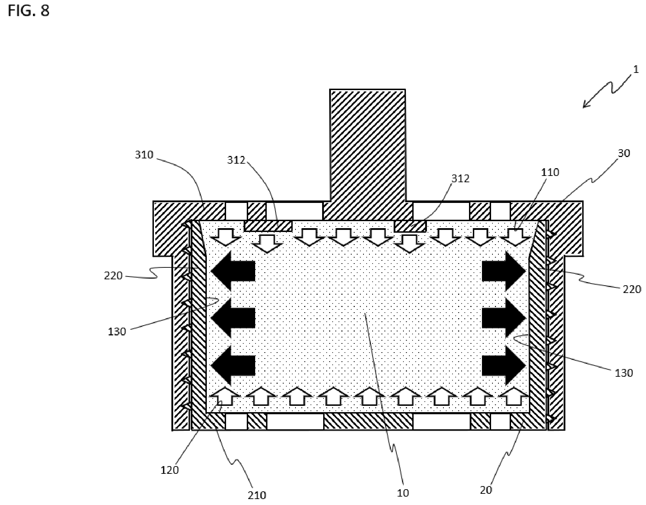

In the water purification cartridge 1 assembled through the above steps illustrated in Fig. 7, the water purification filter 10 is placed in a compressed (deformed) state between the storage case 20 and the lid body 30, as illustrated in Fig. 8. The relationship between the water purification filter 10, the storage case 20, and the lid body 30 in the water purification cartridge 1 will be described below with reference to Fig. 8.

Fig. 8 is a diagram illustrating the water purification cartridge 1 according to the present embodiment, in which the water purification filter 10 is arranged between the storage case 20 and the lid body 30 in a compressed (elastically deformed) state.

In the water purification cartridge 1 illustrated in Fig. 8, the upper end surface 110 of the water purification filter 10 is in contact with the second surface portion 310 (particularly, its inner surface) of the lid body 30 and is pressed axially (from top to bottom in the illustrated example) by the second surface portion 310. In particular, in the water purification cartridge 1 illustrated in Fig. 8, the inner surface of the second surface portion 310 is provided with the second protrusions 312 that protrude toward the inside of the lid body 30 (the lower side in the illustrated example). As described above, in the storage case 20, the axial height AH22 of the first internal space 230 is equal to the axial height AH11(B) of the water purification filter 10 before being stored in the storage case 20. Therefore, the upper end surface 110 of the water purification filter 10 is strongly pressed axially (from top to bottom in the illustrated example) by the second protrusion 312 provided on the inner surface of the second surface portion 310.

Furthermore, one axial end (the lower end in the illustrated example) of the storage case 20 (first peripheral wall portion 220) is closed by the first surface portion 210. As described above, the height AH22 of the first internal space 230 of the storage case 20 is equal to the axial height AH11(B) of the water purification filter 10 before being stored in the storage case 20. Therefore, the water purification filter 10 is pressed in the axial direction (from top to bottom in the illustrated example) by the second surface portion 310 (and the second protrusion 312) of the lid body 30, and at the same time, is pressed in the axial direction (from bottom to top in the illustrated example) by the first surface portion 210 of the storage case 20.

The water purification filter 10 has a hardness of 33 to 59 and is compressible (elastically deformable). In particular, when pressed axially by the second surface portion 310 (and second protrusion 312) of the lid body 30 and the first surface portion 210 of the storage case 20, the water purification filter 10 deforms (elastically deforms) so as to expand radially. The inner diameter ID21 (particularly, inner diameter ID21(1)) of the storage case 20 (first peripheral wall portion 220) is smaller by 1 mm or less than the outer diameter OD11 (outer diameter OD11(B)) of the water purification filter 10. Therefore, the side surface 130 (outer peripheral surface) of the water purification filter 10 and the inner peripheral surface of the storage case 20 (first peripheral wall portion 220) are in contact with each other without any gaps. In particular, at the end of the storage case 20 closed by the first surface portion 210, the side surface 130 of the water purification filter 10 and the inner peripheral surface of the storage case 20 are in contact with each other without any gaps.

As described above, in the water purification cartridge 1, one axial end surface (lower end surface 120 in the illustrated example) of the water purification filter 10 is in contact with the first surface portion 210 (particularly, its inner surface) of the storage case 20. The other axial end surface (upper end surface 110 in the illustrated example) of the water purification filter 10 is in contact with the second surface portion 310 (particularly, its inner surface) of the lid body 30.

As described above, in the water purification cartridge 1, the water purification filter 10 is pressed into the storage case 20 by the second surface portion 310 of the lid body 30 and is stored in the storage case 20 in a radially compressed (for example, elastically deformed) state. In particular, the water purification filter 10 is stored in the storage case 20 in a state in which the side surface 130 is pressed against the inner peripheral surface of the storage case 20 by being pressed axially by the storage case 20 and the lid body 30. The water purification filter 10 is deformed (expanded) in the radial direction by being pressed axially by the storage case 20 and the lid body 30, and the side surface 130 of the water purification filter 10 is in close contact with the inner peripheral surface of the storage case 20, that is, without any gaps.

As described above, the lower end surface 120 of the water purification filter 10 is in contact with the first surface portion 210 of the storage case 20, and the upper end surface 110 of the water purification filter 10 is in contact with the second surface portion 310 of the lid body 30. Therefore, the water purification cartridge 1 can prevent raw water from passing through the gap between the water purification filter 10 and the storage case 20 and the gap between the water purification filter 10 and the lid body 30, and can ensure that raw water passes through the water purification filter 10.

Furthermore, the inner diameter ID21(1) of at least the end of the storage case 20 closed by the first surface portion 210 is smaller by 1 mm or less than the outer diameter OD11 (OD11(B)) of the water purification filter 10. However, as described above, the water purification filter 10 has a hardness of 33 to 59 and is compressible. Therefore, the lid body 30 presses the water purification filter 10 in the axial direction by the second surface portion 310, compressing and forcing the water purification filter 10 into the storage case 20, whereby the water purification filter 10 can be stored in the storage case 20. The lid body 30 then closes the open end of the storage case 20 with the water purification filter 10 stored inside, by the second surface portion 310. Therefore, the lid body 30 can stably store the water purification filter 10 in a compressed state in the storage case 20.

In particular, in the present embodiment, the lid body 30 is detachably attached to the storage case 20 by screwing the male thread portion 221 provided on the outer peripheral surface of the first peripheral wall portion 220 of the storage case 20 into the female thread portion 321 provided on the inner peripheral surface of the second peripheral wall portion 320 of the lid body 30.

Therefore, the water purification cartridge 1 allows the lid body 30 to be easily attached to the storage case 20 and the lid body 30 to be easily removed from the storage case 20.

Furthermore, by screwing the male thread portion 221 into the female thread portion 321 of the water purification cartridge 1, for example, the lid body 30 can be attached to the storage case 20 while the water purification filter 10 is pressed into the storage case 20 by the second surface portion 310 of the lid body 30. Therefore, in the water purification cartridge 1, the water purification filter 10 can be easily stored in the storage case 20 by pressing the water purification filter 10 into the storage case 20 by the lid body 30 as the lid body 30 is attached to the storage case 20.

### <8. Features>

As described above, the water purification filter 10 according to an aspect of the present invention is a columnar water purification filter formed by winding a sheet containing fibrous activated carbon and the water purification filter 10 has a hardness of 33 to 59.

As described above, the present inventors confirmed that by setting the hardness of a columnar water purification filter (water purification filter 10) made by winding a sheet containing fibrous activated carbon to 33 to 59, the water purification filter can remarkably achieve the following advantageous effects. That is, the water purification filter 10 with a hardness of 33 to 59 can be compressed (deformed) by human force (for example, can be easily compressed). Therefore, the water purification filter 10 can be easily stored, for example, in a cylindrical storage case (for example, storage case 20) with an inner diameter smaller than the outer diameter OD11 of the water purification filter 10. In addition, storing the water purification filter 10 in such a storage case prevents raw water from passing through the gap between the side surface 130 of the water purification filter 10 and the inner peripheral surface of the storage case, ensuring that raw water passes through the water purification filter 10.

In contrast, a water purification filter having a hardness greater than the upper limit value (59) (for example, the water purification filter according to Comparative Example) cannot be stored in a cylindrical storage case having an inner diameter smaller than the outer diameter of the water purification filter.

That is, unlike a water purification filter with a hardness greater than the above-described upper limit (59), the water purification filter 10 has a hardness of 33 to 59, which allows raw water to reliably pass through the water purification filter 10. Furthermore, by setting the hardness to 33 to 59, the water purification filter 10 can be easily compressed and loaded into a cylindrical storage case having an inner diameter smaller than the outer diameter OD11 of the water purification filter 10, and can also be easily removed from the storage case.

Therefore, the water purification filter 10 has the advantageous effect of being easily attached to and detached from a cylindrical storage case having an inner diameter smaller than the outer diameter OD11 of the water purification filter 10, while ensuring that raw water passes through the water purification filter 10.

The water purification cartridge 1 according to an aspect of the present invention includes the water purification filter 10, the storage case 20, and the lid body 30. The storage case 20 removably stores the water purification filter 10 and has the cylindrical first peripheral wall portion 220. One axial end of the first peripheral wall portion 220 is open, and the other end is closed by the first surface portion 210. The inner diameter ID21(1) of at least the end of the first peripheral wall portion 220 closed by the first surface portion 210 is smaller by 1 mm or less than the outer diameter OD11 of the water purification filter 10. The first surface portion 210 is provided with the first water flow portion 211 through which purified water flows out or raw water flows in. The lid body 30 is detachably attached to the storage case 20 and has the cylindrical second peripheral wall portion 320. One axial end of the second peripheral wall portion 320 is open, and the other axial end is closed by the second surface portion 310. The second surface portion 310 is provided with the second water flow portion 311 through which raw water flows in or purified water flows out. The second surface portion 310 closes the open end of the storage case 20 that stores the water purification filter 10 so as to be removable.

As described above, the water purification filter 10 has a hardness of 33 to 59 and is compressible. The storage case 20 is cylindrical in shape and has the inner diameter ID21 (particularly, inner diameter ID21(1)) that is smaller than the outer diameter OD11 (OD11(B)) of the water purification filter 10. The lid body 30 is detachably attached to the storage case 20 so as to close the open end of the storage case 20 that stores the water purification filter 10 in a removable manner.

Therefore, in the water purification cartridge 1, the water purification filter 10 can be compressed and stored in the storage case 20 (can be easily stored). By storing the water purification filter 10 in the storage case 20, the water purification cartridge 1 achieves the following advantageous effects. That is, the water purification cartridge 1 can prevent raw water from passing through a gap between the side surface 130 of the water purification filter 10 and the inner peripheral surface of the storage case 20 (first peripheral wall portion 220), thereby ensuring that raw water passes through the water purification filter 10. The water purification cartridge 1 ensures that the outer peripheral surface of the water purification filter 10 and the inner peripheral surface of the storage case 20 are in contact with each other without any gaps, at least at the end of the storage case 20 closed by the first surface portion 210. Further, in the water purification cartridge 1 the water purification filter 10 can be compressed and easily stored in the storage case 20, and the lid body 30 can be detachably attached to the storage case 20 storing the water purification filter 10. Moreover, the lid body 30 of the water purification cartridge 1 can be easily removed from the storage case 20, and the water purification filter 10 can also be easily removed from the storage case 20.

Therefore, the water purification cartridge 1 has the advantageous effect of allowing the water purification filter 10 to be easily attached to and detached from the storage case 20 while ensuring that raw water passes through the water purification filter 10 by using the water purification filter 10, the storage case 20, and the lid body 30.

A method for assembling a water purification cartridge according to an aspect of the present invention includes the above-described steps S110 to S150. Specifically, in step S110, the water purification filter 10 is prepared. In step S120, the storage case 20 is prepared. In step S130, the water purification filter 10 is inserted into the first peripheral wall portion 220 of the storage case 20 (first internal space 230). In step S140, the lid body 30 is prepared. In step S150, the lid body 30 is detachably attached to the storage case 20, while the storage case 20 with the water purification filter 10 inserted therein is stored in the lid body 30. Specifically, in step S150, the storage case 20 with the water purification filter 10 inserted in the first peripheral wall portion 220 (first internal space 230) is stored in the lid body 30 (second internal space 330) from the open end side of the lid body 30. Additionally, in step S150, the lid body 30 is detachably attached to the storage case 20 such that the open end of the storage case 20 is closed by the second surface portion 310 of the lid body 30.

As described above, the water purification filter 10 has a hardness of 33 to 59 and is compressible. According to the assembly method, the water purification filter 10 is compressed, allowing the water purification filter 10 to be stored in the storage case 20 having the inner diameter ID21 smaller than the outer diameter OD11 of the water purification filter 10. According to the assembly method, the water purification filter 10 is compressed and stored in the storage case 20, thereby bringing the side surface 130 of the water purification filter 10 into contact with the inner peripheral surface of the storage case 20 without any gaps. The assembly method brings the side surface 130 of the water purification filter 10 into contact with the inner peripheral surface of the storage case 20 without any gaps, at least at the end of the storage case 20 closed by the first surface portion 210.

The assembly method provides the following advantageous effects by storing the water purification filter 10 in the storage case 20. That is, the assembly method can provide the water purification cartridge 1 that prevents raw water from passing through the gap between the side surface 130 of the water purification filter 10 and the inner peripheral surface of the storage case 20, ensuring that raw water passes through the water purification filter 10. In addition, according to the assembly method, the water purification filter 10 can be compressed and easily stored in the storage case 20, and the lid body 30 can be detachably attached to the storage case 20 storing the water purification filter 10. Furthermore, the water purification cartridge 1 assembled using the assembly method allows the lid body 30 to be easily removed from the storage case 20, and allows the water purification filter 10 to be easily removed from the storage case 20.

Therefore, the assembly method has the advantageous effect of providing the water purification cartridge 1 in which the water purification filter 10 can be easily attached to and detached from the storage case 20 while ensuring that raw water passes through the water purification filter 10 by using the water purification filter 10 and the storage case 20.

### <9. Modifications>

Although the embodiments of the present invention have been described above, the present invention is not limited to the above-described embodiments, and various modifications are possible without departing from the spirit of the present invention. The following modifications can be combined as appropriate.

Figs. 1 to 3 illustrate an example of the water purification cartridge 1 in which the lid body 30 is arranged on the vertically upper side and the storage case 20 is arranged on the vertically lower side. However, it is not essential that the lid body 30 is arranged on the vertically upper side and the storage case 20 is arranged on the vertically lower side in the water purification cartridge 1. In the water purification cartridge 1, the lid body 30 may be arranged on the vertically lower side and the storage case 20 may be arranged on the vertically upper side.

In the case of arranging the lid body 30 on the vertically lower side and arranging the storage case 20 on the vertically upper side, raw water flows into the first water flow portion 211 provided on the first surface portion 210 of the storage case 20. In addition, purified water flows out of the second water flow portion 311 provided on the second surface portion 310 of the lid body 30.

In the case of arranging the lid body 30 on the vertically lower side and arranging the storage case 20 on the vertically upper side, a knob that allows a user of the water purification cartridge 1 to easily remove the water purification cartridge 1 from the container 2 may be provided on the first surface portion 210 of the storage case 20. That is, in the case of arranging the lid body 30 on the vertically lower side and arranging the storage case 20 on the vertically upper side, a protrusion that protrudes axially outward may be provided on the axially outer (upper) surface of the first surface portion 210 of the storage case 20. The water purification cartridge 1 may allow a user of the water purification cartridge 1 to easily remove the water purification cartridge 1 from the container 2 by using the protrusion provided on the upper surface of the first surface portion 210 of the storage case 20 as a knob.

### REFERENCE SIGNS LIST

- 1: Water purification cartridge
- 10: Water purification filter
- 20: Storage case
- 30: Lid body
- 110: Upper end surface (the other end surface in the axial direction of the water purification filter)
- 120: Lower end surface (one end surface in the axial direction of the water purification filter)
- 210: First surface portion
- 211: First water flow portion
- 220: First peripheral wall portion
- 221: Male thread portion
- 222: Tapered portion
- 310: Second surface portion
- 311: Second water flow portion
- 313: First protrusion (protrusion)
- 320: Second peripheral wall portion
- 321: Female thread portion
- ID21: Inner diameter of storage case
- OD11: Outer diameter of water purification filter
- S110: Step of preparing water purification filter
- S120: Step of preparing storage case
- S130: Step of inserting water purification filter into storage case
- S140: Step of preparing lid body
- S150: Step of attaching lid body to storage case

## Claims

1. A water purification filter comprising
a wound sheet containing fibrous activated carbon, wherein
the water purification filter is columnar in shape, and
the water purification filter has a hardness of 33 to 59 measured by a following measurement method:
<Measurement Method>
the measurement is performed using a hardness tester GS701G manufactured by TECLOCK Co., Ltd. in accordance with the method prescribed in JIS S 6050 "Plastic Erasers," and the average value for N = 5 is taken as the hardness.

2. The water purification filter according to claim 1, wherein the water purification filter has elasticity.

3. The water purification filter according to claim 1 or 2, wherein
the water purification filter is stored in a cylindrical storage case, and
the water purification filter has an outer diameter that is larger by 1 mm or less than an inner diameter of the storage case at least at one point in an axial direction.

4. A water purification cartridge comprising:
the water purification filter according to claim 1 or 2;
a storage case configured to store the water purification filter in a removable manner; and
a lid body detachably attached to the storage case, wherein
the storage case has a cylindrical first peripheral wall portion,
one axial end of the first peripheral wall portion is open, and the other axial end of the first peripheral wall portion is closed by a first surface portion,
an inner diameter of at least the other end closed by the first surface portion of the first peripheral wall portion is smaller by 1 mm or less than the outer diameter of the water purification filter,
the first surface portion is provided with a first water flow portion through which purified water flows out or raw water flows in,
the lid body has a cylindrical second peripheral wall portion,
one axial end of the second peripheral wall portion is open, and the other axial end of the second peripheral wall portion is closed by a second surface portion,
the second surface portion is provided with a second water flow portion through which raw water flows in or purified water flows out, and
the second surface portion closes the open end of the storage case in which the water purification filter is removably stored.

5. The water purification cartridge according to claim 4, wherein
one axial end surface of the water purification filter is in contact with the first surface portion of the storage case, and
the other axial end surface is in contact with the second surface portion of the lid body.

6. The water purification cartridge according to claim 4, wherein the lid body is detachably attached to the storage case by screwing a male thread portion provided on an outer peripheral surface of the first peripheral wall portion of the storage case into a female thread portion provided on an inner peripheral surface of the second peripheral wall portion of the lid body.

7. The water purification cartridge according to claim 4, wherein the first peripheral wall portion of the storage case is formed with a tapered portion whose inner diameter increases toward the open end.

8. The water purification cartridge according to claim 4, wherein a protrusion that protrudes axially outward is provided on an axially outer peripheral surface of at least one of the first surface portion of the storage case and the second surface portion of the lid body.

9. A method of assembling a water purification cartridge, the method comprising:
a step of preparing a water purification filter that is formed by winding a sheet containing fibrous activated carbon, wherein
the water purification filter is columnar in shape, and
the water purification filter has a hardness of 33 to 59 measured by a following measurement method;
a step of preparing a storage case for removably storing the water purification filter, the storage case having a cylindrical first peripheral wall portion, one axial end of the first peripheral wall portion being open and the other axial end of the first peripheral wall portion being closed by a first surface portion, in the first peripheral wall portion, an inner diameter of at least the other end closed by the first surface portion being smaller by 1 mm or less than an outer diameter of the water purification filter, and the first surface portion being provided with a first water flow portion through which purified water flows out or raw water flows in;
a step of inserting the water purification filter into the first peripheral wall portion of the storage case from the open one end of the storage case;
a step of preparing a lid body that is detachably attached to the storage case, the lid body having a cylindrical second peripheral wall portion, one axial end of the second peripheral wall portion being open and the other axial end of the second peripheral wall portion being closed by a second surface portion, the second surface portion being provided with a second water flow portion through which raw water flows in or purified water flows out; and
a step of detachably attaching the lid body to the storage case such that the open one end of the storage case is closed by the second surface portion of the lid body while the storage case with the water purification filter inserted into the first peripheral wall portion from a side of the open end of the lid body, is stored in the lid body:
<Measurement Method>
the measurement is performed using a hardness tester GS701G manufactured by TECLOCK Co., Ltd. in accordance with the method prescribed in JIS S 6050 "Plastic Erasers," and the average value for N = 5 is taken as the hardness.

10. The method of assembling a water purification cartridge according to claim 9, wherein in the step of detachably attaching the lid body, the water purification filter is stored in the first peripheral wall portion of the storage case by pressing the water purification filter into the storage case by the second surface portion of the lid body.

11. The method of assembling a water purification cartridge according to claim 9 or 10, wherein
a male thread portion is provided on an outer peripheral surface of the first peripheral wall portion of the storage case,
a female thread portion is provided on an inner peripheral surface of the second peripheral wall portion of the lid body, and
in the step of detachably attaching the lid body, the lid body is detachably attached to the storage case by screwing the male thread portion into the female thread portion while the water purification filter is pressed into the storage case by the second surface portion of the lid body.
